(19) Europäisches Patentamt
European Patent Office
Office européen des brevets

(11) **EP 3 623 115 B1**

(12) **EUROPEAN PATENT SPECIFICATION**

(45) Date of publication and mention
of the grant of the patent:
**01.10.2025  Bulletin 2025/40**

(21) Application number: **19161245.6**

(22) Date of filing: **07.03.2019**

(51) International Patent Classification (IPC):
**B25J 9/16** (2006.01)

(52) Cooperative Patent Classification (CPC):
**B25J 9/1612; B25J 9/1633;** B25J 9/1687;
G05B 2219/39189; G05B 2219/39319;
G05B 2219/39321; G05B 2219/39322;
G05B 2219/39339; G05B 2219/39516;
G05B 2219/39529; G05B 2219/40006;
G05B 2219/40008; G05B 2219/40014;
G05B 2219/40058; G05B 2219/42034;       (Cont.)

(54) **HAND CONTROL DEVICE**

**HANDSTEUERUNGSVORRICHTUNG**

**DISPOSITIF DE COMMANDE MANUELLE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **06.09.2018  JP 2018167257**

(43) Date of publication of application:
**18.03.2020  Bulletin 2020/12**

(73) Proprietor: **KABUSHIKI KAISHA TOSHIBA**
**Minato-ku**
**Tokyo 105-0023 (JP)**

(72) Inventors:
• **Ogawa, Akihito**
  **Tokyo, 105-8001 (JP)**
• **Oaki, Junji**
  **Tokyo, 105-8001 (JP)**
• **Masuda, Tetsuya**
  **Kawasaki-shi,**
  **Kanagawa, 212-0013 (JP)**

(74) Representative: **Hoffmann Eitle**
**Patent- und Rechtsanwälte PartmbB**
**Arabellastraße 30**
**81925 München (DE)**

(56) References cited:
**DE-U1- 202015 002 531      GB-A- 2 235 067**
**JP-A- S61 142 087          US-A1- 2009 069 942**
**US-A1- 2016 354 925**

• **MOHAMAD BDIWI ET AL: "Robot control system
with integrated vision/force feedback for
automated sorting system", TECHNOLOGIES
FOR PRACTICAL ROBOT APPLICATIONS
(TEPRA), 2012 IEEE INTERNATIONAL
CONFERENCE ON, IEEE, 23 April 2012
(2012-04-23), pages 31 - 36, XP032186053, ISBN:
978-1-4673-0855-7, DOI: 10.1109/
TEPRA.2012.6215650**

(52) Cooperative Patent Classification (CPC): (Cont.)
G05B 2219/42123

## Description

FIELD

Embodiments described herein relate generally to a hand control device.

BACKGROUND

Conventionally, robots with a manipulator are known. The manipulator grasps an object at a first position with a hand and conveys the object to a second position (Japanese Laid-open Patent Publication No. 2015-85501, for example).

It is beneficial to provide a novel hand control device with less inconvenience that can ensure grasping of an object. US 2009/069942 A1 relates to a robot apparatus having multi-link structure including a plurality of links and joints serving as link movable sections, and in which at least some of the links are driver by combination of position control and force control is disclosed.

MOHAMAD BDIWI ET AL: "Robot control System with Integrated Vision/Force feedback for automated sorting System", TECHNOLOGIES FOR PRACTICAL ROBOT APPLICATIONS (TEPRA), 2012 IEEE INTERNATIONAL CONFERENCE ON, IEEE, 23 April 2012, pages 31 -36 relates to an automated sorting system designed for libraries and specifically aims at finding out the form, position, orientation, and the alphabetic/numeric code of the object and at defining the most appropriate control mode for different cases of grasping.

US 2016/354925 A1 relates to a robot control apparatus controlling a robot including a manipulator, a force detector provided in the manipulator, and an actuator that drives the manipulator based on a target position, includes a display control unit that displays a motion position of the manipulator derived based on a target force and an output of the force detector and the target position on a screen

BRIEF DESCRIPTION OF THE DRAWINGS

FIG. 1 is an exemplary schematic configuration diagram of an object handling system according to an embodiment;
FIG. 2A is a schematic side view of an exemplary hand according to the embodiment;
FIG. 2B is a schematic side view of an exemplary hand according to the embodiment different from that illustrated in FIG. 2A;
FIG. 2C is a schematic side view of an exemplary hand according to the embodiment different from those illustrated in FIGS. 2A and 2B;
FIG. 2D is a schematic side view of an exemplary hand according to the embodiment different from those illustrated in FIGS. 2A, 2B, and 2C;
FIG. 3A is an exemplary schematic side view illustrating an object held by the hand illustrated in FIG. 2A;
FIG. 3B is an exemplary schematic side view illustrating the object held by the hand illustrated in FIG. 2B;
FIG. 3C is an exemplary schematic side view illustrating the object held by the hand illustrated in FIG. 2C;
FIG. 3D is an exemplary schematic side view illustrating the object held by the hand illustrated in FIG. 2D;
FIG. 4 is an exemplary block diagram of a hand control device according to the embodiment;
FIG. 5 is an exemplary flowchart illustrating a procedure of grasping, moving, and releasing the object by the hand under the control of the hand control device according to the embodiment;
FIG. 6 is an exemplary schematic explanatory diagram illustrating a moving path of the hand controlled by the hand control device according to the embodiment;
FIG. 7A is a schematic perspective view illustrating exemplary movement of the object to the release position through force control by the hand control device according to the embodiment;
FIG. 7B is a schematic perspective view illustrating another exemplary movement of the object to the release position through force control by the hand control device according to the embodiment;
FIG. 8 is a block diagram of an operation controller of the hand control device according to the embodiment;
FIG. 9 is a block diagram of a fingertip coordinates force controller of the hand control device according to the embodiment;
FIG. 10 is a block diagram of a gravitation compensator of the hand control device according to the embodiment;
FIG. 11 is a schematic perspective view illustrating an exemplary state in which the object is held by the hand controlled by the hand control device according to the embodiment;
FIG. 12 is an exemplary flowchart illustrating the procedure of control by the operation controller of the hand control device according to the embodiment in a grasp operation;
FIG. 13A is an exemplary schematic side view illustrating the state or moving path of the hand at a certain position in a grasp operation of the hand according to the embodiment;

FIG. 13B is an exemplary schematic side view illustrating the state or moving path of the hand at a position different from that in FIG. 13A in the grasp operation of the hand according to the embodiment;

FIG. 13C is an exemplary schematic side view illustrating the state or moving path of the hand at a position different from those in FIGS. 13A and 13B in the grasp operation of the hand according to the embodiment;

FIG. 14A is an exemplary schematic perspective view illustrating an exemplary release operation of the hand according to the embodiment;

FIG. 14B is an exemplary schematic perspective view illustrating another exemplary release operation of the hand according to the embodiment;

FIG. 15 is an exemplary flowchart illustrating the procedure of control by the operation controller of the hand control device according to the embodiment in a release operation;

FIG. 16A is an exemplary schematic side view illustrating the state or moving path of the hand at a certain position in a release operation of the hand according to the embodiment;

FIG. 16B is an exemplary schematic side view illustrating the state or moving path of the hand at a position different from that in FIG. 16A in the release operation of the hand according to the embodiment;

FIG. 16C is an exemplary schematic side view illustrating the state or moving path of the hand at a position different from those in FIGS. 16A and 16B in the release operation of the hand according to the embodiment;

FIG. 16D is an exemplary schematic side view illustrating the state or moving path of the hand at a position different from those in FIGS. 16A to 16C in the release operation of the hand according to the embodiment;

FIG. 16E is an exemplary schematic side view illustrating the state or moving path of the hand at a position different from those in FIGS. 16A to 16D in the release operation of the hand according to the embodiment;

FIG. 16F is an exemplary schematic side view illustrating the state or moving path of the hand at a position different from those in FIGS. 16A to 16E in the release operation of the hand according to the embodiment;

FIG. 16G is an exemplary schematic side view illustrating the state or moving path of the hand at a position different from those in FIGS. 16A to 16F in the release operation of the hand according to the embodiment;

FIG. 16H is an exemplary schematic side view illustrating the state or moving path of the hand at a position different from those in FIGS. 16A to 16G in the release operation of the hand according to the embodiment;

FIG. 17A is an exemplary schematic side view illustrating the state or moving path of the hand at a certain position in another release operation of the hand according to the embodiment;

FIG. 17B is an exemplary schematic side view illustrating the state or moving path of the hand at a position different from that in FIG. 17A in the other release operation of the hand according to the embodiment;

FIG. 17C is an exemplary schematic side view illustrating the state or moving path of the hand at a position different from those in FIGS. 17A and 17B in the other release operation of the hand according to the embodiment;

FIG. 17D is an exemplary schematic side view illustrating the state or moving path of the hand at a position different from those in FIGS. 17A to 17C in the other release operation of the hand according to the embodiment;

FIG. 18A is an exemplary schematic side view illustrating the state or moving path of the hand at a certain position in a still another release operation of the hand according to the embodiment;

FIG. 18B is an exemplary schematic side view illustrating the state or moving path of the hand at a position different from that in FIG. 18A in the still other release operation of the hand according to the embodiment;

FIG. 18C is an exemplary schematic side view illustrating the state or moving path of the hand at a position different from those in FIGS. 18A and 18B in the still other release operation of the hand according to the embodiment; and

FIG. 18D is an exemplary schematic side view illustrating the state or moving path of the hand at a position different from those in FIGS. 18A to 18C in the still other release operation of the hand according to the embodiment.

DETAILED DESCRIPTION

In general, according to one embodiment, a hand control device includes a plan generator and an operation controller. The plan generator is configured to generate an operation plan of a hand that grasps an object. The operation controller is configured to control operation of the hand by switching between a first control mode and a control mode different from the first control mode. The first control mode is a mode in which the hand is controlled to operate through force or moment acting on the hand.

Hereinafter, an exemplary embodiment of the present invention is disclosed below. Configurations and controls (technological features) of the embodiment described below, and results (effects) achieved by the configurations and controls are exemplary.

Overall System Configuration

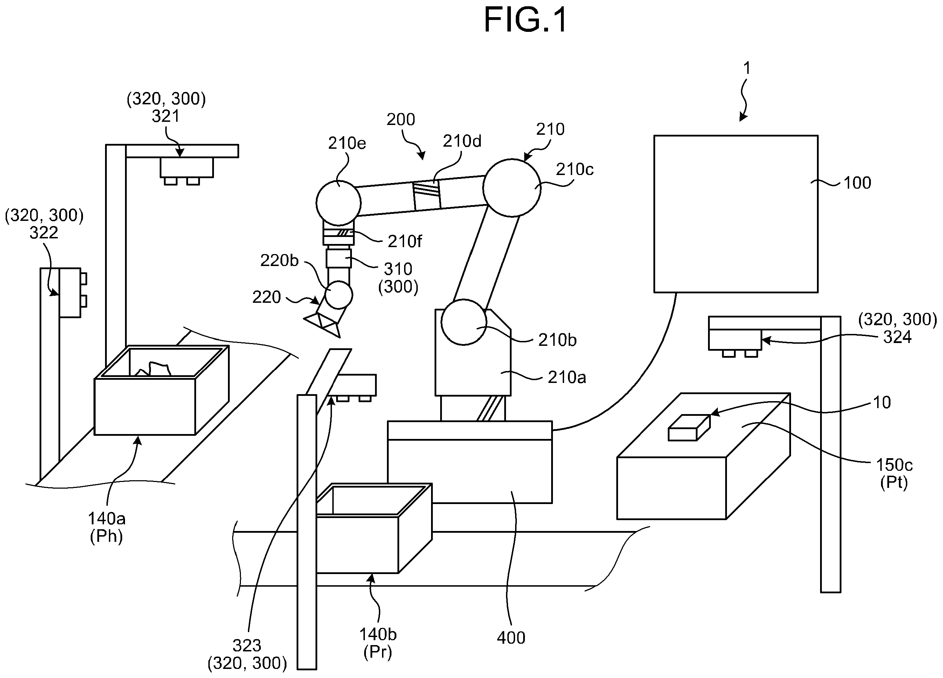

FIG. 1 is a schematic configuration diagram of an object handling system 1. The object handling system 1 includes a manipulator 200, a control device 100, a sensor 300, and a housing 400. The object handling system 1 grasps an object 10 at a grasp position Ph, conveys the object 10, and releases the object 10 at a release position Pr. Such an operation may also be referred to as conveyance or picking of the object 10. The control device 100 is an exemplary hand control device. The object 10 is an exemplary object to be conveyed.

The manipulator 200 includes an arm 210 and a hand 220. The arm 210 is, for example, a multijoint robot including rotational parts 210a to 210f rotated by a plurality (for example, six) of servomotors. The arm 210 is not limited thereto but may be a scalar robot or a prismatic robot. Alternatively, the arm 210 may be a combination of at least two of a multijoint robot, a scalar robot, and a prismatic robot. The manipulator 200 may also be referred to as a robotic arm.

The hand 220 includes, for example, a suction mechanism illustrated in FIG. 1 but is not limited thereto. The hand 220 may include, for example, a jamming mechanism, a sandwiching mechanism, or a multi-finger mechanism. Alternatively, the hand 220 may include at least two of a suction mechanism, a jamming mechanism, a sandwiching mechanism, and a multi-finger mechanism. The hand 220 may also be referred to as an end effector.

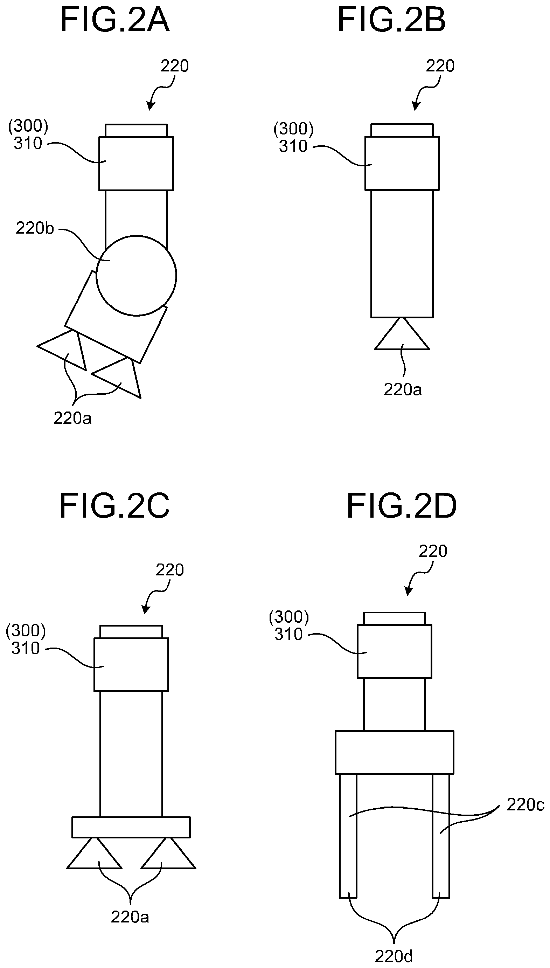

FIGS. 2A to 2D are configuration diagrams of the hand 220. As illustrated in FIGS. 2A to 2D, the hand 220 includes a force sensor 310. The location and position of the force sensor 310 are not limited to the ones in FIGS. 2A to 2D. The hand 220 may include various sensors in addition to the force sensor 310. The force sensor 310 is an example of the sensor 300.

The hand 220 illustrated in FIG. 2A includes a bend 220b. The hand 220 may include a movable part such as a rotational part or an extendable part in addition to the bend 220b.

As illustrated in FIGS. 2A to 2C, the hand 220 includes a suction pad 220a as the suction mechanism. In this case, the hand 220 may include, for example, a pressure sensor for the suction pad 220a. Specifications of the suction pad 220a such as the number, arrangement, shape, and size may be changed in various manners.

The hand 220 illustrated in FIG. 2D includes fingers 220c as a sandwiching mechanism or a multi-finger mechanism.

The manipulator 200 may include a replaceable hand 220. In this case, the hand 220 may be replaced by a mechanism such as a tool changer (not illustrated).

The sensor 300 may be a torque sensor, a rotation sensor, or a current sensor for motors provided to the rotational parts 210a to 210f (FIG. 1), other than the force sensor 310. The control device 100 may determine force acting on the hand 220 from a detected value of the force sensor 310, or may calculate the force from the current value or rotation value (detected by the rotation sensor) of each motor.

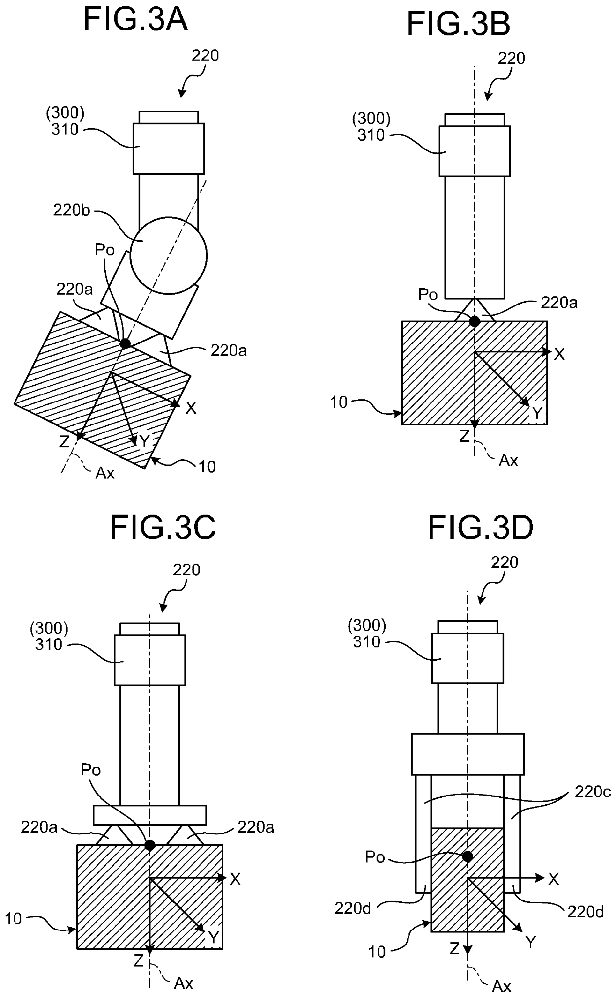

FIGS. 3A to 3D are diagrams illustrating the object 10 held by the hand 220 in FIGS. 2A to 2D. Points Po in FIGS. 3A to 3D are referred to as tool center points. A coordinate system having an origin at the tool center point Po, a Z axis coinciding with a grasp reference axis Ax of the hand 220, and an X axis and a Y axis orthogonal to the Z axis is referred to as fingertip coordinates. The grasp reference axis Ax corresponds to, for example, the axis of a rotational part (for example, the rotational part 210f in FIG. 1) nearest to the hand 220, which rotates the hand 220 about the extending direction of the hand 220. When the hand 220 includes the bend 220b (FIG. 3A), the grasp reference axis Ax corresponds to the axis of a leading end 220d of the hand 220 passing through the barycenter or symmetric center in the extending direction of the leading end 220d, or corresponds to the axis of the leading end 220d matching the axis of the rotational part (for example, the rotational part 210f in FIG. 1) nearest to the hand 220 while the bend 220b is extended. The hand 220 is positioned, for example, with the grasp reference axis Ax passing the tool center point Po and the tool center point Po coinciding with the barycenter or center of a contact region between the hand 220 and the object 10, but is not limited thereto. The tool center point Po may also be referred to as a compliance center.

As illustrated in FIG. 1, the object handling system 1 includes a plurality of cameras 320. Each camera 320 is an example of the sensor 300 and may also be referred to as an image sensor. Examples of the cameras 320 include an RGB image camera, a distance image camera, a laser range finder, and a laser imaging detection and ranging (LiDAR), to be able to generate image information and three-dimensional distance information. The cameras 320 are an exemplary monitor.

The cameras 320 of the object handling system 1 include, for example, a camera 321 for grasping, a camera 322 for grasping check or calibration, a camera 323 for releasing, and a camera 324 for temporary placement.

The grasping camera 321 images and detects the object 10 to be held or carried out at and around the grasp position Ph. At the grasp position Ph, the object 10 is housed in a container 140a such as a container or a pallet. In this case, the grasp camera 321 images and detects part or all of inside the container 140a. The grasp position Ph may also be referred to as a moving start position or departure position of the object 10. In FIG. 1, the container 140a is placed on a conveyance mechanism such as a belt conveyer, but is not limited to this placement.

The calibration camera 322 images and detects the object 10 at a calibration position, which is set to outside the container 140a above the grasp position Ph.

The release camera 323 images and detects the object 10 at and around the release position Pr at which the object 10 is to be released and carried in. At the release position Pr, the object 10 is housed in a container 140b such as a container or a pallet. In this case, the release camera 323 images and detects part or all of inside the container 140b. The release position Pr may also be referred to as a moving end position or arrival position of the object 10. In FIG. 1, the container 140b is placed on a conveyance mechanism such as a belt conveyer, but is not limited to this placement.

The temporary-placement camera 324 images and detects the object 10 at or around a temporary position Pt at which the object 10 is temporarily placed between the grasp position Ph and the release position Pr. At the temporary position Pt, the object 10 is placed on a temporary surface 150c such as a table or a stage. In this case, the temporary placement camera 324 images and detects part or all of the surface 150c. The temporary position Pt may also be referred to as a halfway position or stopover position of the object 10. The temporary position Pt does not need to be set on the mount surface.

The housing 400 may house various kinds of components and parts of the object handling system 1 such as a power supply for driving an electric actuator such as a motor, a cylinder, a tank, and a compressor for driving a fluid actuator, and various safety mechanisms. The housing 400 may house the control device 100.

Control Device

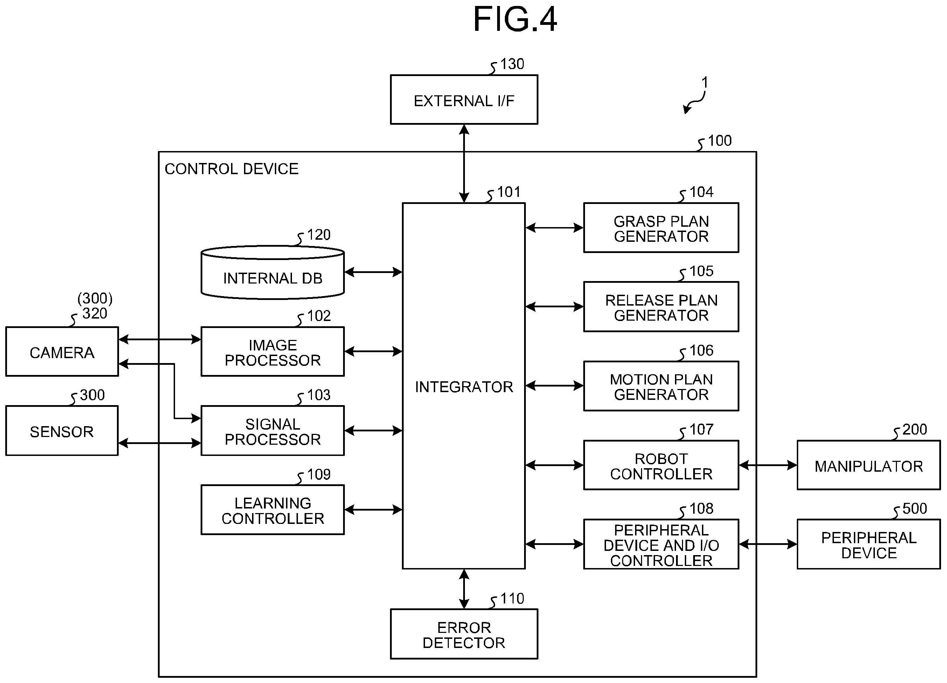

FIG. 4 is a block diagram of the control device 100. The control device 100 includes, for example, an integrator 101, an image processor 102, a signal processor 103, a grasp plan generator 104, a release plan generator 105, a motion plan generator 106, a robot controller 107, a peripheral device and input-output (I/O) controller 108, a learning controller 109, an error detector 110, and an internal database (DB) 120.

The integrator 101 generates work plan of the object handling system 1, and operates and manages the object handling system 1 on the basis of user input information from an external interface (I/F) 130, the state of the object handling system 1, and detected values of the sensors 300.

The image processor 102 processes images and information (detected values) from the cameras 320, and generates information necessary for operation planning, operation control, error detection, and learning, for example.

The signal processor 103 processes information (detected value) from the sensor 300, and generates information necessary for operation planning, operation control, and error detection, for example. The signal processor 103 is an exemplary detected-value acquirer.

The grasp plan generator 104 calculates a grasping method, the grasp position Ph and a grasp posture of the object 10 by the manipulator 200, and paths and waypoints through which any necessary element is movable to the grasp position Ph and the grasp posture without interfering the surrounding environment. The grasp plan generator 104 is an exemplary plan generator and an exemplary grasp posture determiner. The grasp posture is an exemplary first grasp posture. The necessary element refers to, for example, the overall manipulator 200 or a part of the arm 210. The object handling system 1 according to the present embodiment can perform force control, therefore, the parts having certain flexibility, such as a suction pad or elastic joints may be allowed to contact the surrounding environment to some extent.

The release plan generator 105 calculates a disposition method, such as pressing, in a place in which the manipulator 200 boxes or sets the grasping object 10 in the container 140b. The release plan generator 105 also calculates a grasping method, a releasing method, the release position Pr and a release posture of the object 10 by the manipulator 200, and paths and waypoints through which any necessary element is movable to the release position Pr and the release posture without interfering with the surrounding environment. The release plan generator 105 is an exemplary plan generator. The release posture is substantially the same as the grasp posture immediately before releasing, and thus the release plan generator 105 is an exemplary grasp posture determiner. The release posture is an exemplary first grasp posture.

The motion plan generator 106 calculates, in accordance with an instruction from the integrator 101, robot operation information including an operation method, an operation speed, and an operation path of the manipulator 200 so as to move the manipulator 200 from the current position to the grasp position Ph, the temporary position Pt, and the release position Pr through a movable path waypoints. The motion plan generator 106 is an exemplary plan generator.

The robot controller 107 controls the object handling system 1 including the manipulator 200 in accordance with robot operation information generated by the grasp plan generator 104, the release plan generator 105, or the motion plan generator 106, and various switching instructions from the integrator 101. The robot controller 107 receives various kinds of posture information and trajectory plan information from the integrator 101 to control the manipulator 200 in accordance with such information. The robot controller 107 is an exemplary operation controller.

The peripheral device and I/O controller 108 controls various conveyers, a peripheral device 500 such as a safety door, acquires various kinds of sensor information, and controls inputs and outputs (I/O) for illumination control.

The learning controller 109 controls learning functions including robot model learning for improving operation accuracy such as reduction of vibration of the manipulator 200, grasp-control parameter learning for improvement in grasping the object 10, grasp database learning, and error detection learning for improvement in operation-planning performance. In the present embodiment, the learning controller 109 selects optimum parameter values depending on a situation in the force control, to be described later in detail. These values may be empirically set by a person, however, the use of results of machine learning leads to labor and power saving and efficient processing.

The error detector 110 monitors the state of the object handling system 1, a progress of a work plan, the state of drive control, and grasping and conveyance of the object 10 for error detection. The error detector 110 can implement the error detection by monitoring, for example, the output of the force sensor 310, values on fingertip coordinates converted from the output of the force sensor 310, and the values on fingertip coordinates having filtered through a lowpass filter and determining error when the values exceed their corresponding threshold values. As a result, this can implement, for example, interruption of work in progress and proceeding to a recovery operation.

The internal database (DB) 120 includes, for example, a robot database, a hand database, an object database, a grasp database, and an environment database, although none of them is illustrated.

The robot database (robot DB) stores, for example, the structure of the object handling system 1, the dimension, weight, and inertia moment of each element, and the operation area, speed, and torque performance of each driver.

The hand database (hand DB) stores, for example, information on the function and grasp characteristics of the hand 220.

The object database (object DB) stores, regarding the object 10, the name, identification number, category, image information of the entire surface, CAD-model information, weight information, and grasp characteristic information (soft, breakable, deformable, and the like), for example.

The grasp database (grasp DB) stores, for the object 10 in each grasping method by the hand 220, a possible grasp position, a possible grasp posture, score information such as graspablity, an allowable pressing amount in grasping, a threshold for determining grasp, and a determination threshold for error detection, for example. The grasping method is, for example, air-suctioning, parallel two-fingered gripping, parallel four-fingered gripping, or multi-joint fingered gripping.

The environment database (environment DB) stores, for example, information on a work table with which the object handling system 1 is associated, and surrounding environment information representing the operation area of the object handling system 1 or a nearby obstacle O.

The external I/F 130 transfer data between the integrator 101 (control device 100) and an external device (not illustrated).

Picking Procedure

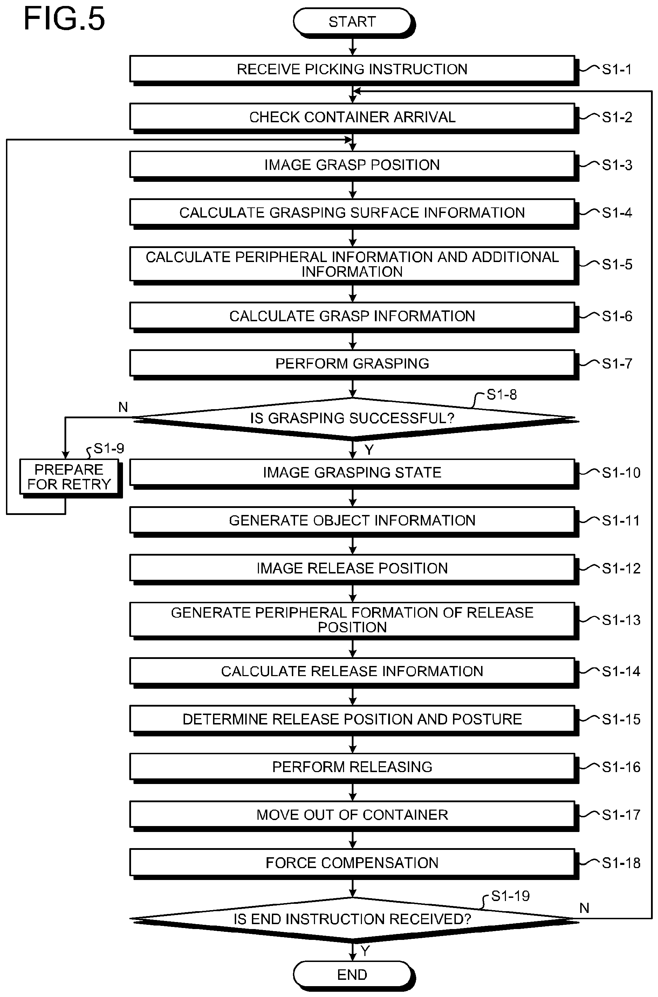

FIG. 5 is a flowchart illustrating the procedure of grasping, moving, and releasing the object 10 by the control device 100.

First at S1-1, the integrator 101 receives an instruction for conveying (picking) the object 10 from an external device through the external I/F 130.

At S1-2, the integrator 101 detects the arrival of the object 10 or the container 140a housing the object 10 at the grasp position Ph from an image generated by the camera 321 or a value detected by the sensor 300 such as a photoelectric sensor or a micro switch.

At S1-3, the integrator 101 controls the camera 321 to image the object 10 at and around the grasp position Ph, for example, the inside of the container 140a housing the object 10.

At S1-4, the image processor 102 determines presence or absence of the object 10 and identifies a graspable surface of the object 10 based on an image captured by the camera 321. In addition, the image processor 102 calculates grasping-surface information including the shape and size of the graspable surface of the object 10, or the position and posture thereof in a three-dimensional space.

At S1-5, the grasp plan generator 104 calculates, on the basis of grasping-surface information, a plurality of items of grasp information to be used by the manipulator 200 to grasp the surface of the object 10. The grasp information includes grasp-position information and grasp-posture information. The grasp plan generator 104 calculates additional information such as the moving direction of the hand 220, the magnitude of pressing force, and an allowable moving area in the force control to be described later, on the basis of peripheral information on the grasp position Ph of an object (peripheral element) other than the object 10 in the container 140a, the grasping-surface information, and the information stored in the object DB, and adds the additional information to the grasp information.

At S1-6, the integrator 101 selects or determines the object 10 to grasp, the grasp position Ph of the object 10, and the grasp posture of the object 10 according to the grasp information. Then, the motion plan generator 106 generates robot operation information from the current position of the manipulator 200 to the grasp position Ph and the grasp posture. For the generation of the robot operation information, the motion plan generator 106 selects, for example, a high-speed operation in a region in which the manipulator 200 will not or is less likely to interfere or collide with an object other than the object 10. However, the motion plan generator 106 selects a lower-speed operation in a region in which the hand 220 will or is likely to interfere or collide with the object 10 and an object other than the object 10, for example, when the hand 220 comes closer to the container 140a or enters the container 140a. In addition, the motion plan generator 106 sets a target value of force acting on the hand 220 in the region.

At S1-7, the robot controller 107 operates in accordance with the generated robot operation information and controls the manipulator 200 and the hand 220 to grasp the object 10 at the grasp position Ph in the grasp posture. In the surrounding region of the grasp position Ph of the object 10, the hand 220 performs a pressing operation under the force control alone, and a grasp operation such as suction or sandwiching to the object 10 in sufficient contact with the suction pad 220a and the fingers 220c. When contacting an obstacle O such as an object other than the object 10 in the surrounding region of the grasp position Ph, for example, the hand 220 moves away from the obstacle O in accordance with a given operation and a given target force value. The hand 220 can operate by a given pressing method and a given pressing force, contacting the grasping surface of the object 10 even if the grasping surface is relatively largely tilted.

The integrator 101 or the robot controller 107 monitors the operations and grasping states of the manipulator 200 and the hand 220. When determining a successful grasping at S1-8 (YES at S1-8), the process proceeds to S1-10. When determining a failure of the grasping (NO at S1-8), the process proceeds to S1-9.

At S1-9, the integrator 101 prepares a retry including a retraction of the manipulator 200 and registration of information indicating the failure of grasping in the object DB. After S1-9, the process returns to S1-3.

At S1-10, the robot controller 107 controls the manipulator 200 to move to a position at which the grasping state of the object 10 by the hand 220 can be imaged. The integrator 101 controls the camera 322 to generate an image of the hand 220 grasping the object 10 at this position.

At S1-11, the image processor 102 generates, from the image captured by the camera 322, information on the object 10 such as the position and the posture of the object 10 relative to the hand 220 and the state and shape of the object 10.

At S1-12, the integrator 101 controls the camera 323 to generate an image of the object 10 at and around the release position Pr, for example, the inside of the container 140b containing the object 10 after the release. In addition, a gravitation compensator 107d compensates for a gravitational force such as by resetting the force sensor 310. Having set the next release posture, the robot controller 107 controls the manipulator 200 and the hand 220 to place the hand 220 in a calibration posture substantially the same as or close to the release posture, and in this state, the gravitation compensator 107d compensates for a gravitational force. Thereby, gravitational force can be accurately compensated for. In addition, the weight of the object 10 may be measured by the force sensor 310.

At S1-13, the image processor 102 generates, from the image generated by the camera 323, peripheral information representing presence or absence of an object other than the object 10 at or around the release position Pr, and the size, position, and surface position of this object. The peripheral information of the release position Pr may also be referred to as obstacle information.

At S1-14, the release plan generator 105 generates release information on the object 10 being held by the manipulator 200 on the basis of, for example, information on the object 10, information in the grasp DB, and the peripheral information. The release information includes, for example, release-position information, release-posture information, waypoint-position information, and waypoint-posture information. The release plan generator 105 calculates additional information such as the pressing direction of the hand 220 along with the force control, and the magnitude of the pressing force, and the allowable moving area by the force control, and adds the additional information to the release information.

At S1-15, the integrator 101 determines the release position Pr and the release posture of the object 10 being held on the basis of the release information. Then, the motion plan generator 106 generates robot operation information from the current position of the manipulator 200 to the release position Pr and the release posture. In this case, for the generation of the robot operation information, for example, the integrator 101 selects a high-speed operation in a region in which the manipulator 200 will not or is less likely to interfere or collide with an object other than the object 10. However, the integrator 101 selects a lower-speed operation in a region in which the hand 220 will or is likely to interfere or collide with the object 10 and an object other than the object 10, for example, when the hand 220 comes closer to the container 140b or enters the container 140b. In addition, the motion plan generator 106 sets a target value of force acting on the hand 220 in the region.

At S1-16, the robot controller 107 operates in accordance with the generated robot operation information, and controls the manipulator 200 and the hand 220 to move the object 10 to the release position Pr and release the object 10 at the release position Pr. When there is a wall of the container 140b or a previously set object having a sufficient size in the surroundings of the release position Pr of the object 10, to place the object 10 in the container 140b at higher density, the hand 220 presses the object 10 against the wall or an intended surface of the previously set object. The hand 220 releases, by a given pressing method and a given pressing force, the object 10 along and in close contact with and the intended surface, even if the intended surface is relatively largely tilted.

At S1-17, after the release of the object 10, the robot controller 107 controls the hand 220 to move out of the container 140b and controls the manipulator 200 to be placed in a standby posture.

At S1-18, the gravitation compensator 107d compensates for the gravitational force such as by resetting the value detected by the force sensor 310 to zero. When determining the grasp posture of a next object 10, the robot controller 107 controls the manipulator 200 and the hand 220 to place the hand 220 in a calibration posture substantially the same as or close to the grasp posture, and in this state, the gravitation compensator 107d compensates for the gravitational force.

At S1-19, upon receipt of an instruction for conveying (picking) of the next object 10 from the external device through the external I/F 130, the integrator 101 returns to S1-2 and starts the series of control over the next object 10 (YES at S1-19). With no next object 10 found, the integrator 101 ends the series of control (NO at S1-19).

Moving Path of Hand

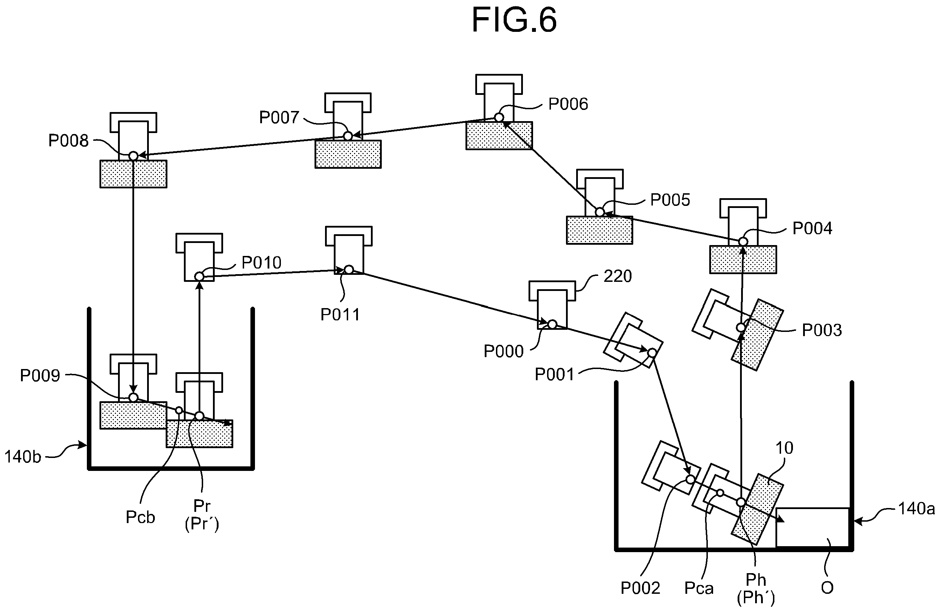

FIG. 6 illustrates the path of a tool center point Pc of the hand 220 in a picking operation.

Position P000 represents an initial position or a standby position. During no picking or standby for a next instruction, the hand 220 stands by in Position P000. By compensating for the gravitational force at Position P000, the time taken for picking can be reduced as compared with by compensating for the gravitational force at a different position at different timing.

Position P001 is set outside the container 140a. At Position P001, the hand 220 is placed in the grasp posture or a posture close to the grasp posture. For example, when the hand 220 includes the bend 220b, at Position P001 the tilt of the bend 220b can be changed to the same tilt as in the grasp posture at the grasp position Ph. This can reduce the risk of collision as compared with changing the posture of the hand 220 in the container 140a. In addition, the gravitational force of the force sensor 310 may be compensated for at Position P001. This enables accurate force control over the hand 220 while pressing, i.e., touching the object 10 around Position P002 and the grasp position Ph. The hand 220 is moved from Position P000 to Position P001), for example, under a control mode (second control mode in which position and posture are set as controlled variables. The second control mode may also be referred to as position control. The posture may also be referred to as, for example, an angle or a rotation angle about the grasp reference axis Ax.

Position P002 represents a position immediately before the grasp position Ph. Position P002 is, for example, separated from the grasp position Ph and the grasp posture in a direction opposite to the pressing direction of the hand 220 by several cm. At Position P002, the hand 220 may be in substantially the same posture as at the grasp position Ph. For example, the hand 220 may be moved from Position P001 to Position P002 by control (in second control mode) in which position is set as a controlled variable during a relatively low moving speed of the hand 220, or by control (in third control mode) in which force and moment in addition to position are set as controlled variables, to enable a retraction with force. The third control mode may also be referred to as position and force control. The moment may also be referred to as, for example, rotational moment about the grasp reference axis Ax.

The grasp position Ph refers to a specified, calculated, estimated, or set grasp position Ph. The hand 220 is controlled by, for example, force control around or in the vicinity of the grasp position Ph. This makes it possible to control the contact force of the hand 220 with the object 10, allowing the hand 220 to securely grasp the object 10. For example, the hand 220 is controlled to move from Position P002 to the grasp position Ph (in third control mode) with position and force being set as controlled variables or with force and moment alone being set as controlled variables (in first control mode). In this case, the hand 220 may be controlled in the intervals from Position P002 to Position Pca and between Position P002 and the grasp position Ph in the third control mode, and controlled in the interval from Position Pca to the grasp position Ph in the first control mode. The first control mode may also be referred to as a force control mode. The grasp position Ph is an exemplary intended position. Position Pca may also be referred to as a switching position.

A grasp position Ph' represents an actual grasp position or a set grasp position of the object 10 by the hand 220. In the force control, for example, when the object 10 is actually located before the grasp position Ph, the hand 220 stops before the grasp position Ph in response to increase in the contact force with the object 10. In such a case, the grasp position Ph' and the grasp position Ph are different from each other. When the actual tilt of the grasping surface of the object 10 is different from the tilt of the grasping surface at the specified grasp position Ph, the hand 220 can contact the actual grasping surface through a contacting operation by the force control. If the hand 220 reaches the grasp position Ph but the object 10 is offset from an estimated position, the hand 220 does not contact with the object 10, thus, does not exert a specified force. In this case the hand 220 is further moved to an allowable moving limit by the force control or the hand 220 contacts the grasping surface offset from the grasp position Ph and stops when the contact force reaches the specified force. In such a case, the grasp position Ph and the grasp position Ph' are different from each other. If the hand 220 contacts an object such as an obstacle O different from the object 10 between Position P002 and the grasp position Ph and moves away to avoid exceeding a specified target force, the grasp position Ph and the grasp position Ph' are different from each other.

Position P003 is set outside the container 140a. At Position P003, the hand 220 is set in substantially the same posture as the grasp posture at the grasp position Ph or the grasp position Ph'. The object 10 and the hand 220 are more likely to contact a nearby object between the grasp position Ph' and Position P003 than at any other position. Thus, the hand 220 moves out of the container 140a to Position P003 without changing the posture as much as possible. In this case, the hand 220 is moved by the position control while the force control is reduced as much as possible.

At Position P004, the hand 220 is set in a posture in which the hand 220 can maintain the grasping of the object 10 against gravitational force as much as possible. The posture in which the hand 220 can maintain the grasping of the object 10 refers to, for example, a downward posture of the suction pad 220a in the case of suctioning, and a slightly laterally downward posture of the fingers 220c in the case of sandwiching.

In the moving interval to Position P005 and Position P006, the hand 220 is placed in an imaging posture suitable for imaging the grasping state. In other words, in the imaging posture the camera 322 can improve imaging accuracy for measuring the grasping object 10. This interval requires accurate position information for imaging, and thus, the hand 220 is subjected to the position control without the force control. In addition, in this moving interval, the force sensor 310 may be compensated for gravitational force while the hand 220 is changed in posture. This can implements accurate compensation for gravitational force.

Position P006 and Position P007 represent standby positions. The hand 220 stands by in Position P006 or Position P007 until imaging of the container 140b, release plan generation, and determining operation information after the release are completed. Compensating for the gravitational force for the force sensor 310 at the standby positions makes it possible to shorten the time taken for picking as compared with the compensation for gravitational force at a different position at different timing. In addition, by compensating for the gravitational force at Position P006 or Position P007 in the calibration posture, which is equivalent to the release posture in terms of gravitational force, that is, the grasp posture immediately before release operation, the hand 220 is accurately controlled by the force control in the release operation. The release posture, i.e., grasp posture immediately before releasing is an exemplary first grasp posture, and the calibration posture is an exemplary second grasp posture.

Position P008 represents a position immediately above the container 140b. At Position P008, the hand 220 is placed in the release posture or a posture close to the release posture. For example, in the case of the hand 220 including the bend 220b, the tilt of the bend 220b at Position P008 can be changed to the same tilt as in the release posture at the release position Pr. This can reduce the risk of collision as compared with changing the posture of the hand 220 inside the container 140b. The hand 220 is moved from Position P006 to Position P008 by, for example, the control (in second control mode) in which position is set as a controlled variable.

Position P009 represents a position immediately before the release position Pr. Position P009 is, for example, separated from the release position Pr and the release posture in a direction opposite to the pressing direction of the hand 220 by several cm to dozen cm. At Position P009 the hand 220 may be in substantially the same posture as at the release position Pr. The hand 220 may be moved from Position P008 to Position P009 by, for example, the control (in second control mode) in which position is set as a controlled variable during a relatively low moving speed, or the control (in third control mode) in which force and position are set as controlled variables, so that a retraction operation by force is feasible.

The release position Pr represents a specified, calculated, estimated, or set release position Pr. The hand 220 is controlled by, for example, the force control around or in the vicinity of the release position Pr. This enables control over the contact force of the hand 220 with the surrounding environment such as a previously set object, and secure release of the object. The hand 220 is moved from Position P009 to the release position Pr by, for example, the control (in third control mode) in which position and force are set as controlled variables, or by the control (in first control mode) in which only force is set as a controlled variable. In this case, the hand 220 may be controlled in the third control mode in the intervals from Position P009 to Position Pcb and between Position P009 and the release position Pr, and controlled in the first control mode in the interval from Position Pcb to the release position Pr. The release position Pr is an exemplary intended position. Position Pca may also be referred to as a switching position.

A release position Pr' represents an actual release position or a set release position of the object 10 by the hand 220. In the force control, for example, when there is a stopper such as a wall or a previously set object before the release position Pr, the hand 220 stops before the release position Pr in response to an increase in the contact force with an obstacle O (nearby object, adjacent object, or preceding object). In such a case, the release position Pr' and the release position Pr are different from each other. When the actual tilt of the pressing surface of the stopper in the vicinity of the release position Pr' is different from the tilt at the specified release position Pr, the hand 220 can contact the actual surface through the force control. If the hand 220 reaches the release position Pr but the stopper is not in an estimated position, the hand 220 does not contact with the stopper, not reaching a specified force. In this case, the hand 220 is further moved by the force control and stops when reaching an allowable moving limit or when contacting the pressing surface offset from the release position Pr and the contact force's reaching the specified force. In such a case, the release position Pr and the release position Pr' are different from each other. In addition, when the hand 220 contacts an object such as an obstacle O between Position P009 and the release position Pr and moves away to avoid the obstacle O so as not to exceed a specified target force, the release position Pr and the release position Pr' are different from each other.

Position P010 is set outside the container 140b. At Position P010, the hand 220 is placed in substantially the same posture as the release posture at the release position Pr or the release position Pr'. Between the release position Pr and the release position Pr' the object 10 and the hand 220 are more likely to contact a nearby object than at any other position. Thus, the hand 220 moves out of the container 140b to Position P010 without changing the posture as much as possible. In this case, the hand 220 is moved at a higher speed by the position control.

In the interval from Position P005 or Position P006 to Position P000 through the release position Pr', the camera 321 can image the inside of the container 140a without being interfered by the hand 220 and the object 10. In the interval from Position P011 to Position P007 through the grasp position Ph', the camera 321 can image the inside of the container 140b without being interfered by the hand 220 and the object 10. In the present embodiment, it is possible to sense collision or no collision between the hand 220 and the surrounding environment from the detected value of the force sensor 310 at an optional position on the path of the hand 220 illustrated in FIG. 6.

The gravitation compensator 107d can compensate for the gravitational force for the force sensor 310 at different positions P005 and P006 while the hand 220 is moved by the position control in the interval from Position P005 to Position P009 in the path for the release position Pr where the hand 220 actually presses. This can shorten the time taken for picking as compared with the compensation for the gravitational force for the force sensor 310 at a different position offset from the path.

In this manner, the object handling system 1 according to the present embodiment can efficiently perform picking operation for grasping and boxing by switching among the position control, force control, and hybrid control being the position control and force control performed in parallel in accordance with the condition of the path. In addition, the object handling system 1 can implement accurate force control operation by compensating for the gravitational force of the force sensor 310 at appropriate position and time in an appropriate posture of the hand 220 depending on various situations.

In the path exemplified in FIG. 6, the interval from Position P002 or Position Pca inside the container 140a to the grasp position Ph and the interval from Position P009 or Position Pcb inside the container 140b to the release position Pr are an exemplary first interval in the first control mode, the interval from Position P003 to Position P008 and the interval from Position P010 to Position P001 outside the containers 140a and 140b are an exemplary second interval in the second control mode. The interval from Position P002 to Position Pca inside the container 140a and the interval from Position P009 to Position Pcb inside the container 140b are an exemplary third interval in the third control mode. In fourth intervals passing inside the containers 140a and 140b, including the interval from Position P001 to Position P002, the interval from the grasp position Ph to Position P003, the interval from Position P008 to Position P009, and the interval from the release position Pr to Position P010, the hand 220 is controlled in the second control mode or the third control mode including the position control. In the fourth intervals the moving speed of the hand 220 is set to lower than in the second interval in the second control mode outside the containers 140a and 140b.

Force Control

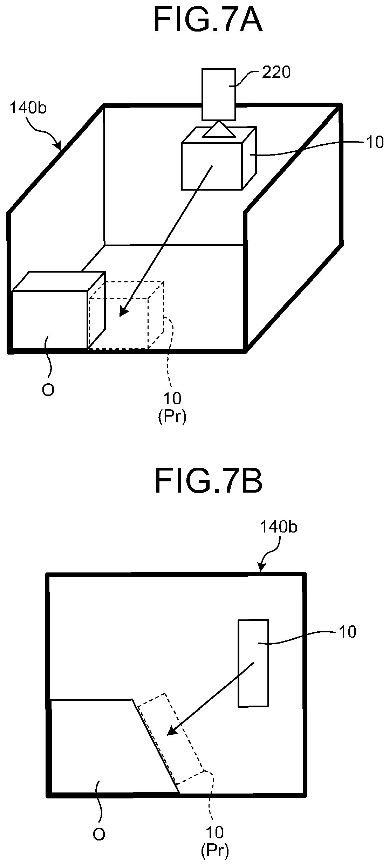

FIG. 7A is a perspective view illustrating movement of the object 10 to the release position Pr under the force control, showing that the object 10 is pressed to a component (obstacle O) around the release position Pr. FIG. 7B is a side view illustrating movement of the object 10 to the release position Pr under the force control, showing that the object 10 is pressed along a slant surface of a component (obstacle O) around the release position Pr.

The following describes the configuration and operation of a force control system of the robot controller 107 (hereinafter simply referred to as the force control system), in particular, when the hand 220 packs the object 10 in the container 140b without gap, that is, boxing. The force control system feeds back a detected value of the force sensor 310, disposed at a wrist (specifically, between the rotational part 210f and the hand 220) of the manipulator 200, to a position control system of the robot controller 107 (hereinafter simply referred to as the position control system), for real-time position correction. The force sensor 310 represents, for example, a six-axial haptic sensor that detects force in three directions and rotational moment about three-directional axes. Specifically, in the boxing operation, the force control system generates a relatively long trajectory of target position values that allows the object 10 to be tightly pressed onto an intended contact surface, to control the object 10 to contact the intended surface, in other words, to relax force. In the direction of contact three degrees of freedom in translation and one degree of freedom in posture about the vertical axis are set, which is sufficient for handling the close contact operation in FIGS. 7A and 7B. Two other degrees of freedom in posture are used to prevent the hand 220 grasping the object 10 from changing in posture and the object 10 from being displaced in a spring-like motion to be described later. In this manner, the object handling system 1 according to the present embodiment can effectively grasp and box the object 10 by switching the force control methods for each axis depending on the situation of an insertion destination or a boxing destination of the hand 220, such as the containers 140a and 140b.

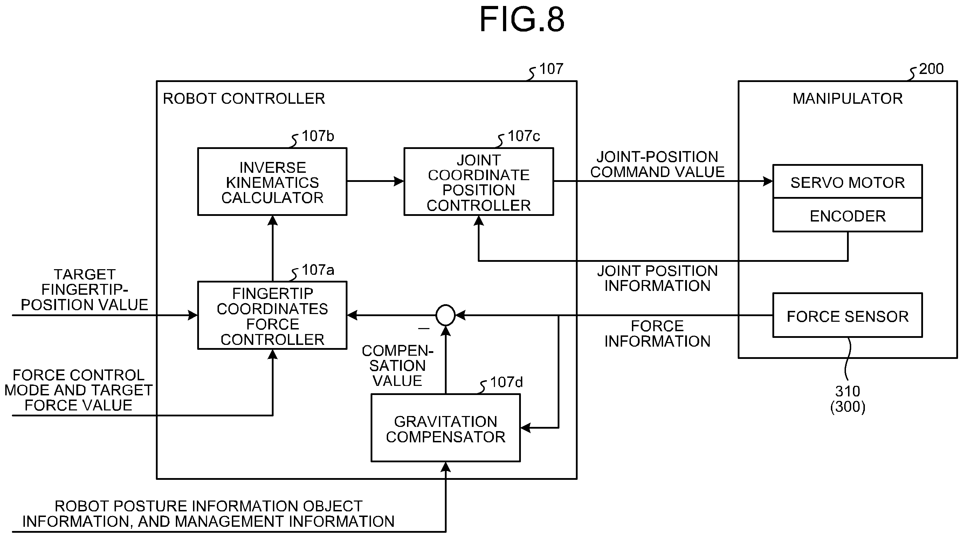

FIG. 8 is a block diagram of the robot controller 107. In the present embodiment, as an example, the robot controller 107 has a block configuration of the force control system based on the position control system. Due to the force sensor 310 located at the wrist, the force control system forms a feedback loop on the fingertip coordinate system, and the robot controller 107 executes position control on a joint coordinate system while converting parameters for the positions and postures of the hand 220 on the fingertip coordinate system into parameters on the base coordinate system of the manipulator 200 in real time. The robot controller 107 includes a fingertip coordinates force controller 107a, an inverse kinematics calculator 107b, a joint coordinate position controller 107c, and the gravitation compensator 107d. The fingertip coordinates force controller 107a receives a target value of fingertip position, in other words, target values of the position and posture of the tool center point Po of the manipulator 200 (hand 220), parameters for the force control, and force information based on a detected value of the force sensor 310, and outputs a command value for the fingertip position to the inverse kinematics calculator 107b. The inverse kinematics calculator 107b calculates the rotational position of each joint axis of the manipulator 200 from the position and posture information of the tool center point Po by inverse kinematics, to implement the intended position and posture. The joint coordinate position controller 107c receives a rotational-position command value for each joint axis from the inverse kinematics calculator 107b, and joint position information on each joint axis of the manipulator 200, and outputs a joint-position command value. The joint coordinate position controller 107c executes feedback control to maintain the joint position at a certain target value. The gravitation compensator 107d calibrates the force sensor 310 for compensating for the gravitational force of the object 10 while the hand 220 is in a certain position and posture. The position of the calibration is included in the path of the hand 220. The gravitation compensator 107d performs calibration in substantially the same posture of the hand 220 as that immediately before grasping the object 10 or immediately before releasing the object 10, while the hand 220 holds the object 10.

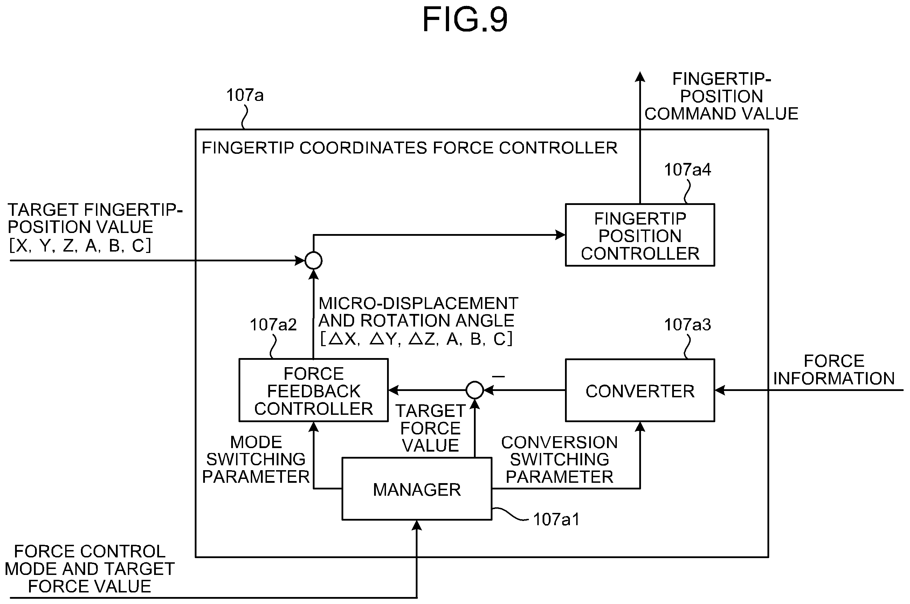

FIG. 9 is a block diagram of the fingertip coordinates force controller 107a. A force feedback controller 107a2 calculates micro-displacements and rotation angles (to be described later) on the basis of the difference between a target force and moment value in the fingertip coordinate system and a detected value. The fingertip coordinates force controller 107a corrects a target position value of the fingertip position in real time at a sampling period of several ms in accordance with the micro-displacements and the rotation angles. Thereby, the hand 220 or the object 10 is controlled to contact an intended surface in accordance with external force and moment. The tool center point Po refers to the point of application in the force and moment control (force control) and the origin of the fingertip coordinate system, and is set to the center of the suction pad 220a in the case of suctioning, as described above. At the tool center point Po, translational force causes only translation, and application of moment causes only rotation. Detected values of force and moment need to be converted from the coordinate system of the force sensor 310 into the fingertip coordinate system. The fingertip coordinates force controller 107a includes a manager 107a1, the force feedback controller 107a2, a converter 107a3, and a fingertip position controller 107a4. In response to a command for the force control mode, the manager 107a1 sets a mode switching parameter and a conversion switching parameter to the force feedback controller 107a2. In addition, the manager 107a1 sets a target force and moment value for each axis. Mode switching of the force feedback controller 107a2 includes ON and OFF of the force control on each axis, switching between an integration operation and a spring-like motion, and switching a control gain depending on the condition of the path. They are exemplary operation mode switching in the force control. The conversion switching parameter is used in switching the position of the tool center point Po in accordance with the state of the hand 220 and the grasping state of the object 10 by the hand 220. The force feedback controller 107a2 receives a differential signal between a target force and moment value and force information, being a detected value of force and moment of the force sensor 310 converted from the coordinate system of the force sensor 310 to the fingertip coordinate system, and outputs micro-displacement command values and rotation-angle command values for the tool center point Po. The converter 107a3 converts force information being three axial forces and moments from the force sensor 310 into force information at the tool center point Po. In this case, the converter 107a3 converts force information through coordinate conversion based on the geometrical relation between the location of the force sensor 310 and the tool center point Po. When the operation of the bend 220b changes a relative posture and a relative position between the force sensor 310 and the tool center point Po, for example, the converter 107a3 performs the conversion taking the change into account. When the hand 220 grasps the object 10, the tool center point Po may be set to the barycenter of the object 10. Upon estimating contact of the grasping object 10 with any object during operation through image recognition, the tool center point Po may be set to an estimated contact point. The tool center point Po is switched with the conversion switching parameter.

The force feedback controller 107a2 includes six controllers for three axial forces and three axial moments. The controllers have the same structure and are expressed by Expression (1) below:

$$G_f(s) = \frac{K_G}{Ms^2 + Ds + K}\left(1 + \frac{K_A}{s}\right) \tag{1}$$

where $K_G$ represents a force-control proportional gain, $K_A$ represents force-control integration gain, M represents a model mass constant, D represents a model damping constant, and K represents a model spring constant. Expression (1) is a transfer function (in digital implementation, square integration at each sampling period) representing that a proportional integration (PI) controller is connected in series to a second-order filter representing a spring and mass damper model. At $K_G = 0$, Gf(s) results in zero. In this case, the fingertip coordinates force controller 107a no longer contributes to the force control and transitions to the position control. Thus, the force feedback controller 107a2 can smoothly switch between position control alone and both force control and position control. At $K_G \neq 0$ and $K_A = 0$, the force feedback controller 107a2 can implement a spring-like motion against external force. At $K_G \neq 0$ and $K_A \# 0$, the force feedback controller 107a2 can implement the integration operation to contact the pressing surface in accordance with external force.

The spring-like motion refers to an operation involving restoration of posture and position, assuming a virtual spring. Upon receiving an axial external force during the force control for a target force value of zero, for example, the force feedback controller 107a2 outputs a command value for reducing the external force sensed by the force sensor 310 to zero. As a result, the manipulator 200 moves in a direction opposite to the axial external force. In the spring-like motion, upon receipt of no external force, the manipulator 200 returns to the original position. Such an operation is referred to as the spring-like motion.

The integration operation refers to an operation in which the manipulator 200 moves in accordance with external force to contact the pressing surface. Upon receiving an axial external force during the force control aiming for a target force value of zero, for example, the force feedback controller 107a2 outputs a command value for reducing the external force sensed by the force sensor 310 to zero. As a result, the manipulator 200 moves in a direction opposite to the axial external force. In the integration operation, even with no external force, the manipulator 200 remains at the final position moved by the external force. Such an operation is referred to as the integration operation.

The force feedback controller 107a2 can be regarded as a second-order or third-order lowpass filter, and at the same time can remove noise from a force sensor signal. The force feedback controller 107a2 can be a simple analog lowpass filter as an anti-aliasing filter for AD conversion of the force sensor signal.

In the object handling system according to the present embodiment, for example, in the pressing operation as illustrated in FIGS. 7A and 7B, the force feedback controller 107a2 is set to perform the integration operation with the three degrees of freedom in translation and the one degree of freedom in posture about the vertical axis, and the spring-like motion with the two degrees of freedom in posture. In this manner, the object handling system can set a proper force control mode depending on the pressing direction and the rotational direction, thereby implementing the boxing operation to securely contact the object.

To prevent drift, the integration operation requires the compensation for gravitational force in advance as a kind of calibration of the force sensor 310. This is intended for cancelling a force component generated by a mass ahead of the force sensor 310 to accurately detect external force at the time of collision or pressing.

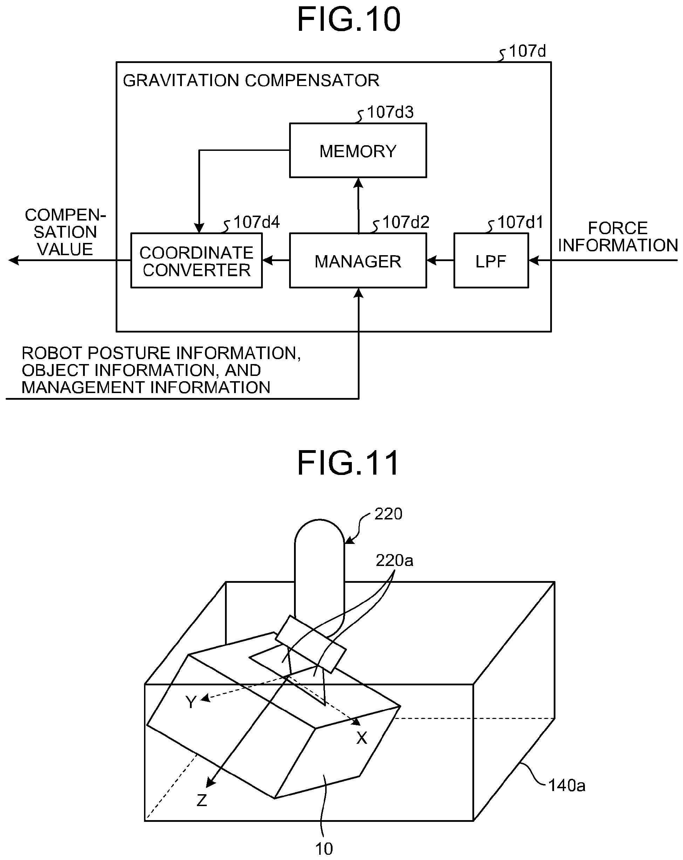

FIG. 10 is a configuration diagram of the gravitation compensator 107d. As illustrated in FIG. 10, the gravitation compensator 107d includes a lowpass filter 107d1 (LPF), a manager 107d2, a memory 107d3, and a coordinate converter 107d4. For example, to find a gravitation compensation value, the lowpass filter 107d1 operates a primary lowpass filter with a six-axial force sensor signal expressed by the following Expression (2) and a slow time constant $T_f0$ in the order of second, in parallel to the force feedback controller 107a2.

$$G_f(s) = \frac{1}{T_f s + 1} \tag{2}$$

The manager 107d2 receives robot-posture information, object information, and management information from the integrator 101 for the gravitation compensation. The robot posture information refers to information indicating the posture of the manipulator 200 including the hand 220. The object information refers to information such as the weight, size, and grasping state of the object 10. The management information refers to, for example, a compensation instruction, and a force control start instruction. When the hand 220 arrives at Position P006, Position P007, or Position P000 to acquire the gravitation compensation value, the integrator 101 outputs a compensation instruction as the management information to the manager 107d2. Receiving the compensation instruction, the manager 107d2 stores, in the memory 107d3, the six-axial force information after having passed through the lowpass filter 107d1 together with current robot posture information and object information. The memory 107d3 stores the robot posture information corresponding to the different postures of the manipulator 200 and the object information, so that the coordinate converter 107d4 can more accurately calculate the gravitation compensation value. The six-axial force information stored in the memory can be prestored other than during the picking operation. When receiving a force-control start instruction as the management information, the manager 107d2 outputs the robot posture information, the object information, and an output start instruction about the compensation value to the coordinate converter 107d4. The coordinate converter 107d4 outputs the gravitation compensation value in response to the compensation-value output start instruction. The coordinate converter 107d4 calculates the gravitation compensation value in accordance with the in-operation robot posture information and the object information from the manager 107d2, using force information for the robot posture information and the object information held in the memory 107d3, and outputs the calculated gravitation compensation value. As an example, the coordinate converter 107d4 may output, as the gravitation compensation value (offset), the force information if the held force information matches or is close to the in-operation robot posture information, and may subtract the offset from a measured value (raw value) of the force sensor 310. When the memory 107d3 stores no gravitation compensation value corresponding to the robot posture information close to the current posture, the coordinate converter 107d4 calculates the gravitation compensation value by interpolation between gravitation compensation values corresponding to other robot posture information. The output value from the lowpass filter 107d1 can also be used for determining threshold for achieving a target force and moment value. Such simple gravitation compensation can be calculated at higher speed, and thus is suitable for the picking that requires high-speed operation.

However, a large posture change in the force control causes larger error in the compensation value. In particular, a change in the angle between the direction of gravitational force and the axis of force detection by the force sensor 310 causes larger error. Thus, the object handling system 1 according to the present embodiment compensates for the gravitational force in a posture same as or close to the posture during the force control. At least in the posture with the direction of gravitational force substantially matching the force detection axis of the force sensor 310, such as when the Z-axis direction of the force sensor 310 in pressing the object 10 is parallel to the direction of gravitational force, the Z-axis direction of the force sensor 310 is set to be parallel to the direction of gravitational force, during this gravitational force compensation. In this case, the rotational position about the Z axis, i.e., the X and Y axis directions may be different. In these directions, stable force control is feasible by calculation with the posture taken into account.

In FIG. 9, the output from the force feedback controller 107a2, when regarded as micro-displacement and rotation angles [$\Delta X$, $\Delta Y$, $\Delta Z$, $\Delta A$, $\Delta B$, and $\Delta C$], can be expressed in a homogeneous transformation matrix by Expression (3) below:

$$\Delta = \begin{bmatrix} 0 & -\Delta C & \Delta B & \Delta X \\ \Delta C & 0 & -\Delta A & \Delta Y \\ -\Delta B & \Delta A & 0 & \Delta Z \\ 0 & 0 & 0 & 0 \end{bmatrix} \quad (3)$$

The fingertip position controller 107a4 derives a homogeneous transformation matrix T d from a trajectory of fingertip (nominal) target position values [X, Y, Z, A, B, C] expressed in the base coordinate system and multiplies the matrix T by this matrix from the right side by calculating the homogeneous transformation matrix of a corrected trajectory of target position values on the base coordinate system in real time. In addition, the inverse kinematics calculator 107b in FIG. 8 calculates a target value of the position control system of each joint through inverse coordinate conversion.

As described above, the force control system generates a relatively long trajectory of target position values that allows the object 10 to be tightly pressed onto an intended contact surface, to control the object 10 to contact the intended surface. However, this is not necessarily sufficient to complete close contact. Thus, after reaching the target position value, the hand 220 is controlled to tightly contact the object 10 by the force control alone in the following sequence. Through the following items (1) to (5), the object 10 is placed in close contact with the corners of the containers 140a and 140b completely.

(1) Suction the object and move the object to above the container 140a or 140b.
(2) Determine the gravitational force compensation value from the current value of the force sensor 310.
(3) Set the target force value to zero and the target position values at the X, Y, and Z coordinates near the corner of the container 140a or 140b. Control three X, Y, and Z directional displacements and rotation about the vertical axis (for example, the X axis) by the integration operation, and control the rotation about the posture directions (for example, the directions about the Y axis and the Z axis) by the spring-like motion. Move the hand 220 by linear interpolation.
(4) After completion of the target position value trajectory, set a target pressing force value and stand by.
(5) Return to a position control mode.

In the item (4), after reaching a target (nominal) linear interpolation value, target force values in the X and Y (plane) directions are set again, aiming for placing the object in close contact only by the force control, irrespective of push-back by the wall of the container 140a or 140b. A target force value in the Z (vertical) direction and a target moment value about a C vertical axis remain at zero. This is based on the technical idea that regarding the former, the use of gravitational force eliminates the necessity for the force control in the Z direction, and regarding the latter, with the target force values in the X and Y directions set, controlling the moment about the C-axis to the target value zero is sufficient operation.

In the object handling system 1 according to the present embodiment, the robot controller 107 as illustrated in FIGS. 8 and 10 senses error such as collision. For example, the error detector 110 (FIG. 4) monitors force signals having been input to the robot controller 107 and having filtered through a lowpass filter (not illustrated). If collision occurs during the position control and generates force that would damage the force sensor 310 and the hand 220, or if during the force control, the manipulator 200 that cancels force moves at the speed exceeding a speed threshold, speed limit, or upper-limit control, generating force that would damage the force sensor 310 and the hand 220, the operation of the manipulator 200 is abruptly stopped. Using the output from the converter 107a3 in FIG. 9, the error detector 110 (FIG. 4) can monitor the force generated at the fingertip so that the operation of the manipulator 200 can be brought to an emergency stop if the force that would not damage the force sensor 310 and the hand 220 but would damage an object held with the fingertips occurs. By switching the operation of the manipulator 200 by the force control and force detection in this manner, the object handling system 1 can implement stable grasping and boxing operations.

Grasping Operation

The following describes the procedure of a grasp operation performed by the object handling system 1 when grasping the object 10. In the grasp operation, the robot controller 107 controls the hand 220 to be softly pressed against the object 10 under the force control.

FIG. 11 is a perspective view illustrating the grasping state of the object 10 with the hand 220. As illustrated in FIG. 11, the robot controller 107 controls the hand 220 to move closer to an intended surface of the object 10 in the vertical direction and to relatively lightly press the surface. This may also be referred to as a touch operation. The touch operation includes the integration operation in which as for the translation components (in the X direction, the Y direction, and the Z direction), target values of a force vector having a magnitude corresponding to a certain pressing force and a direction (Z direction) orthogonal to the grasping surface indicated by a thick arrow in FIG. 11 are set, and target force values are set to zero or equal to or smaller than a dead zone in non-pressing directions, in other words, directions (X direction and Y direction) orthogonal to the pressing direction. As for the moment components about the X and Y axes, the robot controller 107 performs the spring-like motion in which the target force values are set to zero or equal to or smaller than that in a dead zone, and performs the integration operation in which as for the moment component about the Z axis, a target force value is set to zero. A dead zone refers to the range of force that is detectable by the force sensor 310 but not subjected to feedback control. The dead zone is set to, for example, equal to or smaller than control force such as pressing force.

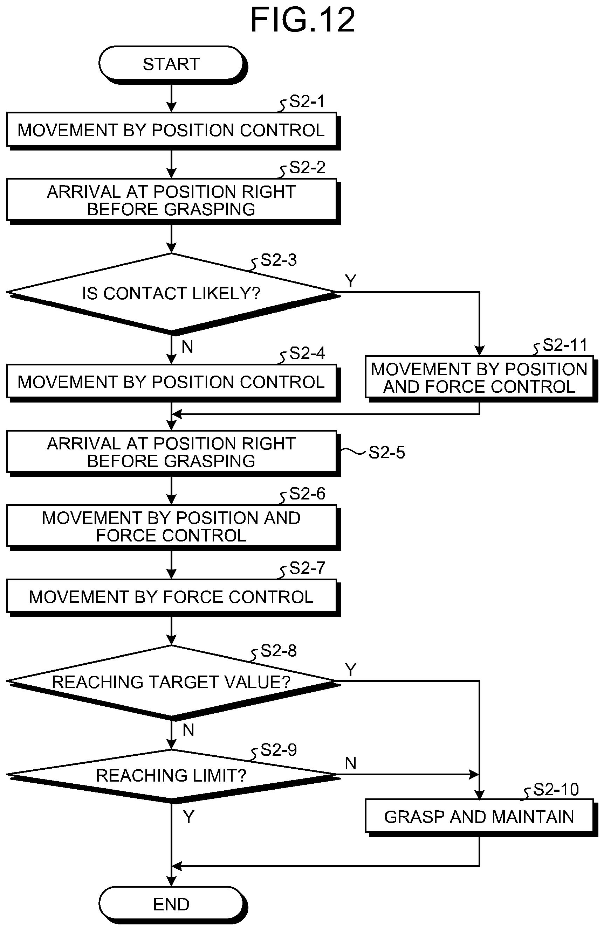

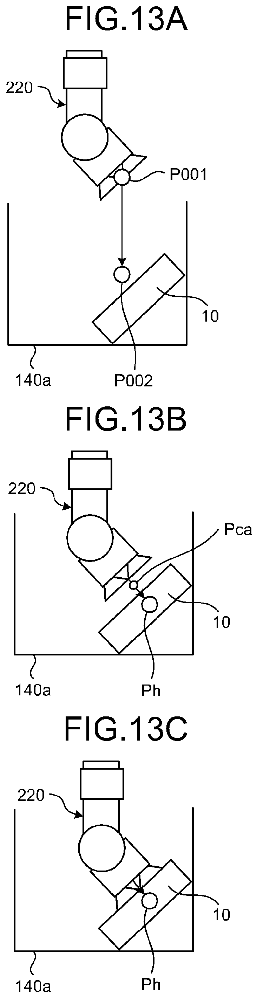

FIG. 12 is a flowchart illustrating the control procedure of the robot controller 107 for the manipulator 200 in the grasp operation. FIGS. 13A to 13C are side views illustrating the state or moving path of the hand 220 at positions in the grasp operation.

At S2-1, receiving an instruction to start the grasp operation from the integrator 101, the robot controller 107 controls the hand 220 to move to Position P001 at a higher speed in the second control mode including the position control.

At S2-2, the robot controller 107 places, at Position P001, the hand 220 in a posture substantially the same as or close to that at the grasp position Ph.

At S2-3, the image processor 102 and the integrator 101 determine, from an image generated by the camera 321, whether the hand 220 will contact an obstacle O other than the object 10 before the grasp position Ph. When determining that the hand 220 will or is likely to contact the obstacle O (YES at S2-3), the process transitions to S2-11. When determining that the hand 220 will not or is unlikely to contact the obstacle O (N at S2-3), the process transitions to S2-4.

At S2-4, in the interval from Position P001 to Position P002 illustrated in FIG. 13A, the robot controller 107 controls the hand 220 in the second control mode including the position control to move at a speed lower than that in the other intervals outside the containers 140a and 140b subjected to different position control. Thus, setting the interval in which the hand 220 moves at a lower speed in the position control can decrease a force threshold for collision detection. By setting a lower force threshold, it is possible for the hand 220 to perform more secure grasp operation and receive less force from interference with the obstacle O, if it occurs, than by a higher threshold.

At S2-5, the hand 220 reaches Position P002 illustrated in FIG. 13A.

At S2-6, the robot controller 107 switches the control mode of the hand 220 from the second control mode including the position control to the third control mode including both the position control and the force control. In the third control mode, as for the translation components (in the X direction, the Y direction, and the Z direction), the robot controller 107 performs the integration operation with target force values set to zero or equal to or smaller than the dead zone. As for the moment components about the X and Y axes, the robot controller 107 performs the spring-like motion with target force values set to zero or equal to or smaller than the dead zone, and as for the moment component about the Z axis, performs the integration operation with target force values set to zero or equal to or smaller than the dead zone. When the respective controlled variables have reached the target values in this control, the robot controller 107 proceeds to S2-7.

At S2-7, when the hand 220 arrives at Position Pca illustrated in FIG. 13B, i.e., before the grasp position Ph, while moving from Position P002 to the grasp position Ph, the robot controller 107 switches the control mode of the hand 220 from the third control mode including both the position control and force control to the first control mode including the force control alone. The robot controller 107 sets each target value in the first control mode so that the hand 220 can vertically press the grasping surface (contact surface) of the object 10. Specifically, for example, the robot controller 107 performs the integration operation in which as for the translation components (in the X direction, the Y direction, and the Z direction), target values of a force vector having a certain pressing force (for example, magnitude equivalent to 5 N) to the grasping surface and the vertical direction (Z direction) are set, and in non-pressing directions (X direction and Y direction) target force values are set to zero or equal to or smaller than the dead zone. As for the moment components, the robot controller 107 performs the spring-like motion in which as for the moment components about the X and Y axes, target force values are set to zero or equal to or smaller than the dead zone, and as for the moment component about the Z axis, performs the integration operation with a target force value set to zero.

In the position control mode, such a situation may occur that the hand 220 appears to have reached an intended position (in this case, the grasp position Ph) on control, however, the hand 220 actually contacts and stops an object before the target position. In this respect, according to the present embodiment, the robot controller 107 controls the hand 220 in the third control mode including both the position control and the force control or in the first control mode including the force control alone to move from Position P002 to the grasp position Ph, which makes it possible to set and maintain the pressing force of the hand 220 to the object 10 at a desired value. In addition, in the present embodiment, since the first control mode includes the spring-like motion in which for the moments about the X and Y axes, the target values are set to zero, a tilt of the grasping surface of the object 10 can be diminished with the moments occurring in the hand 220, which makes the hand 220 orthogonal to the grasping surface, in other words, make the suction pad 220a of the hand 220 contact the grasping surface. Thereby, the hand 220 can securely grasp the object 10.

At S2-8, the robot controller 107 determines whether the controlled variables have reached their corresponding target values. When determining that they have not reached the target values, the robot controller 107 proceeds to S2-9. When determining that they have reached the target value, the robot controller 107 proceeds to S2-10.

At S2-9, the robot controller 107 determines whether the value of each parameter has reached a limit (threshold). The parameters include a preset position limit and a time limit for determining whether operation exceeds a certain period of time. Based on the limit, the robot controller 107 can determine whether the position and posture of the manipulator 200 (hand 220) exceeds a certain range. When the parameter has reached the limit (YES at S2-9), the robot controller 107 ends the series of control. When the parameter has not reached the limit (NO at S2-9), the robot controller 107 proceeds to S2-10.

At S2-10, the robot controller 107 maintains the grasping state of the object 10 by the hand 220 at the grasp position Ph illustrated in FIG. 13C for a certain period of time or longer for secure grasping. At S2-10, when the hand 220 continuously maintains the grasping state for the certain period of time or longer, the robot controller 107 ends the grasp operation and proceeds to the next procedure (for example, moving the hand 220 to Position P003). At S2-10, if the hand 220 fails to continuously maintain the grasping state for the certain period, the robot controller 107 proceeds to a recovery operation.

When determining that the hand 220 will contact or is likely to contact the obstacle O at S2-3 (YES at S2-3), the robot controller 107 controls, at S2-11, the hand 220 to move from Position P001, i.e., from the outside of the container 140a to Position P005, not in the second control mode including the position control but in the third control mode including the position control and the force control. Thereby, if the hand 220 contacts the obstacle O, the hand 220 can move away from the contact point without exerting large contact force. However, a longer travel distance in the third control mode leads to a longer required length of time. Thus, the moving speed of the hand 220 may be set to higher at S2-11 than at S2-6. After S2-11, the robot controller 107 transitions to S2-5.

Under such control over the grasp operation, the robot controller 107 can control the hand 220 by the force control to press the intended surface of each of randomly piled objects 10 at a certain magnitude of vertical force. This makes it possible to avoid, for example, damaging the object 10 due to pressure from or collision with the hand 220, and a failure of grasping due to no contact between the hand 220 and the object 10.

Release Operation

The following describes the procedure of a release operation performed by the object handling system 1 when releasing the object 10. In the release operation, the robot controller 107 executes a touch operation in which the object 10 is softly pressed against a wall or an object near the release position Pr by force control.

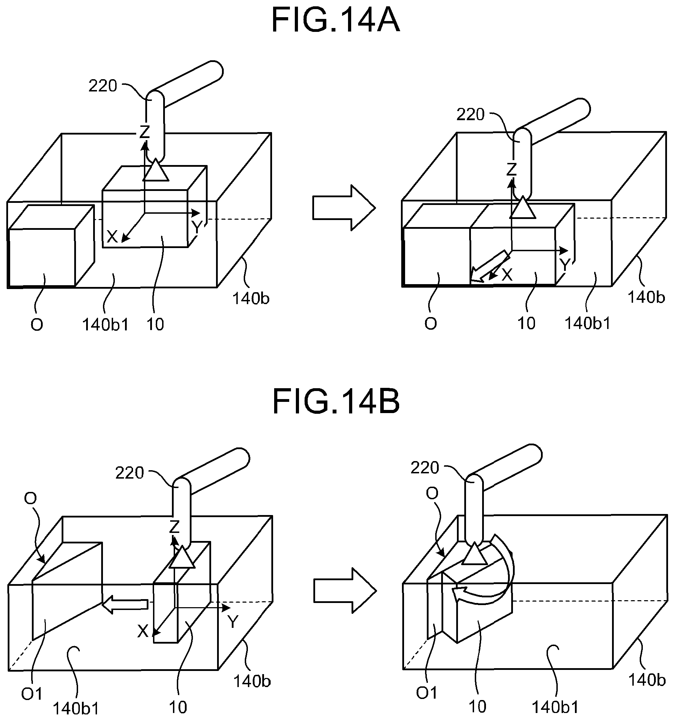

FIGS. 14A and 14B are perspective views illustrating exemplary release operations performed by the hand 220. FIG. 14A illustrates an example of no rotation of the hand 220 in the release operation, and FIG. 14B illustrates an example of the rotation of the hand 220 in the release operation. In the release operation, as for the translation components (in the X direction, the Y direction, and the Z direction), the robot controller 107 performs the integration operation in which target values of a force vector having a magnitude corresponding to a certain pressing force in a pressing direction indicated by thick arrows in FIGS. 14A and 14B are set, and in the non-pressing direction, the target force values are set to zero or equal to or smaller than the dead zones. As for the moment components about the X and Y axes, the robot controller 107 performs the spring-like motion in which the target force values are set to zero or equal to or smaller than the dead zone, and as for the moment component about the Z axis, performs the integration operation in which the target force value is set to zero. In the example illustrated in FIG. 14A, the pressing direction corresponds to a direction in which the hand 220 is inserted to the corner between the obstacle O and a wall 140b1 of the container 140b. The robot controller 107 presses the object 10 against the obstacle O and the wall 140b1. In this case, when the magnitude of the pressing force in each direction is set to 5 [N], target force values in the X, Y, Z, A, B, and C directions are set to (5 [N], -5 [N], -5 [N], 0 [Nm], 0 [Nm], 0 [Nm]). Thereby, the robot controller 107 allows the object 10 to closely contact the container 140b and the set obstacle O, thereby implementing boxing at higher density.

As illustrated in FIG. 14B, the hand 220, while being rotated, is similarly controlled as illustrated in FIG. 14A. Also in this case, when the magnitude of the pressing force in each direction is set to 5 [N], target force values in X, Y, Z, A, B, and C directions are set to (5 [N], -5 [N], -5 [N], 0 [Nm], 0 [Nm], 0 [Nm]). However, in FIG. 14B, the robot controller 107 obliquely presses the object 10 against a side surface O1 of the obstacle O, which causes moment around the contact point between the object 10 and the hand 220 about the Z axis. In this case, at the target value of the moment about the Z axis being 0 [Nm], the hand 220 rotates to cancel the generated moment and places the object 10, contacting the set obstacle O, in other words, in parallel to the side surface O1 of the obstacle O. As described above, in the present embodiment, the object handling system 1 can set an appropriate value to the parameter for each axial direction, thereby placing the object 10 in a close contact with the obstacle O depending on the state of the obstacle O inside the container 140b, and housing the object 10 in the container 140b at higher space efficiency.

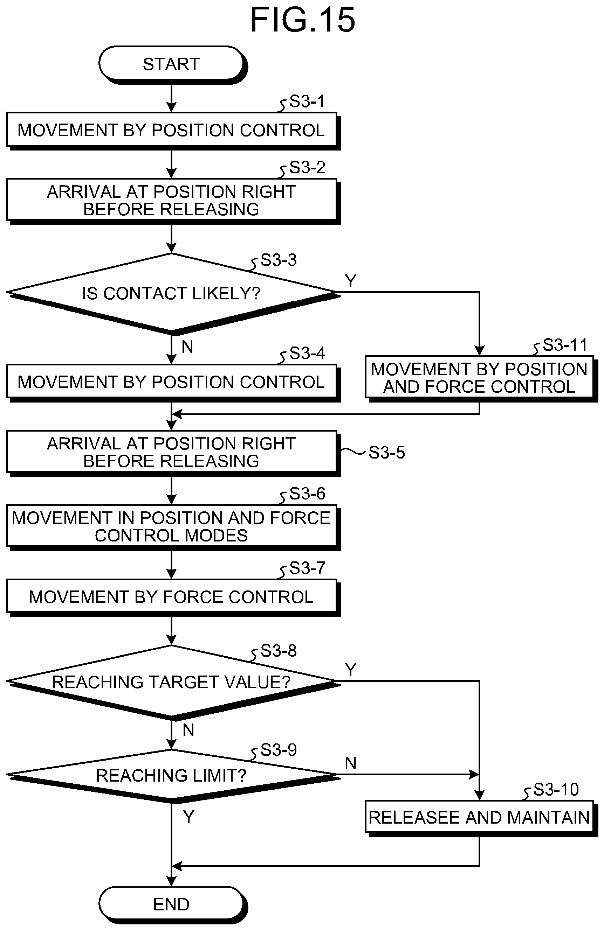

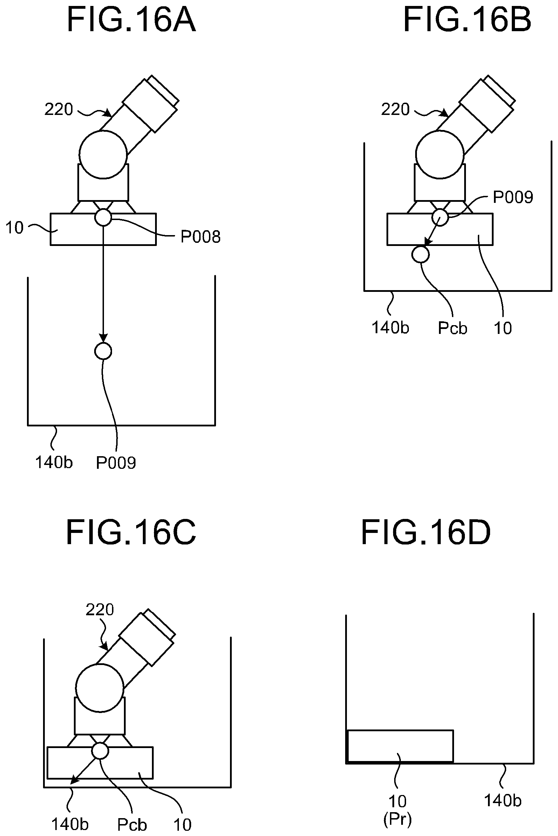

FIG. 15 is a flowchart illustrating the procedure of control of the manipulator 200 by the robot controller 107. FIGS. 16A to 16H are diagrams illustrating the state or moving path of the hand 220 or the object 10 at positions in the release operation.

At S3-1, the robot controller 107 controls the hand 220 to move to Position P008 at a higher speed in the second control mode including the position control.

At S3-2, the robot controller 107 sets the hand 220 at Position P008 in the posture substantially the same as or close to that at the grasp position Ph.

At S3-3, the image processor 102 and the integrator 101 determine, from an image generated by the camera 322, whether the hand 220 will contact an obstacle O other than the object 10 before reaching the release position Pr. When determining that the hand 220 will contact or is likely to contact the obstacle O (YES at S3-3), the process transitions to S3-11. When determining that the hand 220 will not contact or is unlikely to contact the obstacle O (NO at S3-3), the process transitions to S3-4.

At S3-4, in the interval from Position P008 to Position P009 illustrated in FIG. 16A, the robot controller 107 controls the hand 220 in the second control mode including the position control to move at a speed lower than that in the other intervals subjected to the position control, such as the intervals outside the containers 140a and 140b. Thus, setting the interval in which the hand moves at a lower moving speed in the position control makes it possible to set a lower force threshold for collision detection. In comparison with a higher threshold set, the hand 220 can more securely perform the grasp operation and receive less force from the obstacle O when interfering with the obstacle O.

At S3-5, the hand 220 grasping the object 10 reaches Position P009 illustrated in FIGS. 16A and 16B.

At S3-6, the robot controller 107 switches the control mode of the hand 220 from the second control mode including the position control to the third control mode including both the position control and the force control. In this case, as illustrated in in FIGS. 16B and 16C, the hand 220 is controlled to move obliquely downward from Position P009 to the release position Pr to press the object 10 against the bottom surface and a side surface of the container 140b at S3-6. When the controlled variables have reached the corresponding target values in this control, the robot controller 107 proceeds to S3-7.

At S3-7, at Position Pcb illustrated in FIGS. 16B and 16C, i.e., before the release position Pr halfway from Position P009 to the release position Pr, the robot controller 107 switches the control mode of the hand 220 from the third control mode including both the position control and the force control to the first control mode including the force control. The robot controller 107 sets each target value for the first control mode so that the hand 220 can press the grasping object 10 as illustrated in FIG. 16C against the bottom surface and the side surface of the container 140b. Specifically, for example, the robot controller 107 performs the integration operation in which as for the translation components (in the X direction, the Y direction, and the Z direction) target values of a force vector having a certain pressing force (for example, a magnitude corresponding to 5 [N]) and an obliquely downward direction in FIG. 16C toward the bottom surface and the side surface of the container 140b are set, and in the non-pressing directions (directions orthogonal to the obliquely downward direction), the target force values are set to zero or equal to or smaller than the dead zone. As for the moment components about the X and Y axes, the robot controller 107 performs the spring-like motion in which the target force values are set to zero or equal to or smaller than the dead zone, and as for the moment component about the Z axis, performs the integration operation in which the target force value is set to zero. Thereby, as illustrated in FIG. 16D, the object 10 is released at the release position Pr close to the corner between the side surface and the bottom surface of the container 140b.

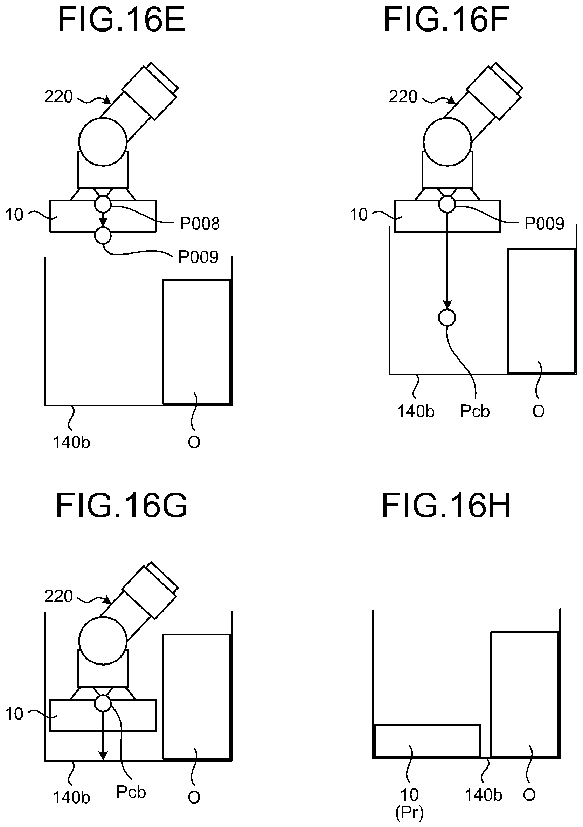

The following describes a situation that there are the walls of the container 140b and a large number of obstacles O around the release position Pr. When the sidewalls of the container 140b and the obstacle O stand on both sides of the release position Pr as illustrated in FIGS. 16E to 16H, the image processor 102 and the integrator 101 determine the surrounding condition on the basis of, for example, the information from the cameras 320, and change an interval (switching position) in which the control mode is switched. The switching can be determined by, for example, comparing between estimated passing positions of the hand 220 and the object 10, and the position of the obstacle O in a distance image from the cameras 320, calculating the shortest distance between the positions, and providing a condition for decreasing the shortest distance by a certain amount or more. In the example illustrated in FIG. 16E, Position P009 is separated from the nearby obstacle O in the different surroundings from those in FIG. 16A. Under this condition, the hand 220 cannot move obliquely downward in FIGS. 16B and 16C. In such a case, the robot controller 107 sets each target value in the first control mode so that the hand 220 can press the grasping object 10 against the bottom surface of the container 140b in the directions orthogonal to the bottom surface as illustrated in FIGS. 16F and 16G. Specifically, for example, the robot controller 107 performs the integration operation in which as for the translation components (in the X direction, the Y direction, and the Z direction), target values of a force vector having a certain pressing force (for example, a magnitude corresponding to 5 [N]) and a downward direction in FIGS. 16F and 16G toward the bottom surface of the container 140b are set, and in the non-pressing directions (X direction and Y direction) the target force values are set to zero or equal to or smaller than the dead zone. As for the moment components about the X and Y axes, the robot controller 107 performs the spring-like motion in which the target force values are set to zero or equal to or smaller than the dead zone, and as for the moment component about the Z axis, performs the integration operation in which the target force value set to zero. In this example, the release position Pr is set to a position above the bottom surface of the container 140b. Also in this case, the object 10 is placed on the bottom surface of the container 140b as illustrated in FIG. 16H.

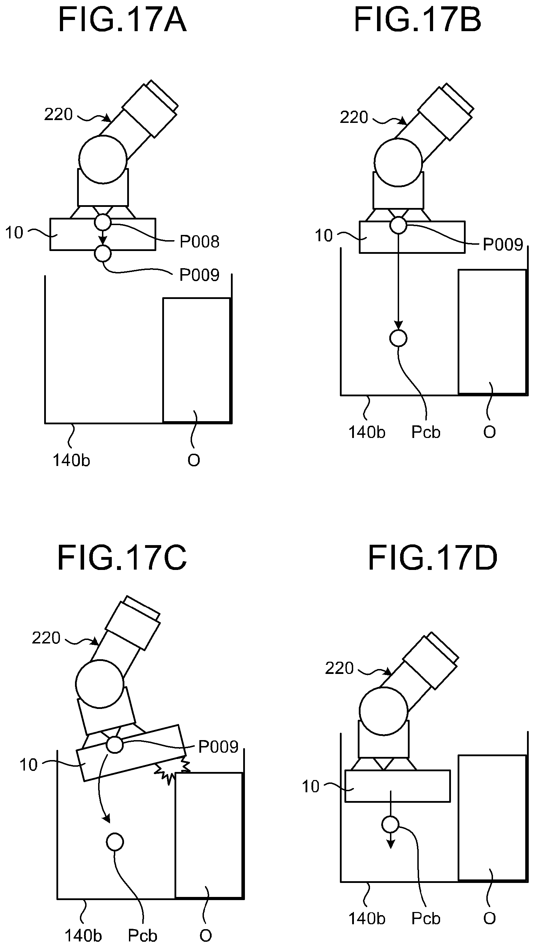

FIGS. 17A to 17D are diagrams illustrating the state of the hand 220 and the object 10 when the object 10 interferes with the obstacle O halfway through downward movement of the hand 220 from Position P009 to the release position Pr at S3-6. Such a situation may occur, for example, that the grasp position or posture of the object 10 by the hand 220, recognized by the object handling system 1, is different from the actual grasp position or posture. As illustrated in FIG. 17C, while the hand 220 moves from Position P009 to the release position Pr in the third control mode, the object 10 collides with the obstacle O. In this case, the collision causes moment about the X and Y axes. In the third control mode, the robot controller 107 performs the spring-like motion with the target values set to zero for the moment about the X and Y axes, which diminishes the moment occurring from the collision, and tilts the hand 220 and the object 10 as illustrated in FIG. 17C. In addition, the collision causes X and Y directional forces, which, however, can be diminished by the target force values set to zero in the X and Y directions are, and moves the hand 220 and the object 10 leftward in FIG. 17D away from the obstacle O as illustrated in FIG. 17D. Thereafter, in the spring-like motion for the moments about the X and Y axes, upon no receipt of external force due to the collision, the hand 220 returns to the release posture before the collision. In addition, by the force integration operation of the robot controller 107 in the X and Y directions, the hand 220 is translated to a position receiving no external force and maintains this position. Thereby, the object 10 is released at the release position Pr without interference with the sidewall of the container 140b and the obstacle O as illustrated in FIG. 17D. As described above, in the present embodiment, the object handling system 1 can set an appropriate value to the parameter for each axial direction, thereby placing the object 10 in a close contact with the container 140b in accordance with the condition of the obstacle O and implementing the housing of the object 10 in the container 140b at higher space efficiency.

At S3-8, the robot controller 107 determines whether the controlled variables have reached the corresponding target values. When they have not reached the target values, the robot controller 107 transitions to S3-9. When the controlled variables have reached the target values, the robot controller 107 transitions to S3-10.

At S3-9, the robot controller 107 determines whether the value of each parameter has reached a limit (threshold). The parameter includes, for example, a preset position limit and a time limit for determining whether operation exceeds a certain length of time. Based on the limit, the robot controller 107 can determine whether the position and posture of the manipulator 200 (hand 220) exceeds a certain range. With the parameter reaching the limit (YES at S3-9), the robot controller 107 ends the series of control. With the parameter having not reached the limit (NO at S3-9), the robot controller 107 transitions to S3-10.

At S3-10, the robot controller 107 maintains the release state of the hand 220 for a certain length of time or more for the purpose of securely releasing the object 10. At S3-10, when the hand 220 continuously maintains the release state for the certain length of time or longer, the robot controller 107 ends the release operation, and proceeds to the next procedure (for example, moving the hand 220 to Position P010). At S3-10, when the hand 220 fails to continuously maintain the release state for the certain length of time, the robot controller 107 proceeds to a recovery operation.

When determining that the hand 220 will contact or is likely to contact the obstacle O at S3-3 (YES at S3-3), the robot controller 107 controls, at S3-11, the hand 220 not in the second control mode including the position control but in the third control mode including both the position control and the force control to move from Position P008, i.e., the outside of the container 140a to Position P009. This can move the hand 220 away from the contact point with the container 140a or the obstacle O, if contact occurs, without exerting large contact force. However, a longer travel distance in the third control mode leads to a longer required length of time. In view of this, the moving speed may be set to higher at S3-11 than at S3-6. After S3-11, the robot controller 107 returns to S3-5.

Through the control over the release operation as described above, the hand 220, while grasping the object 10, can be moved from the outside of the container 140b to the release position Pr, avoiding interference with the walls of the container 140b and the obstacle O. In addition, through the force control, the robot controller 107 can release the object 10 in contact (adjacent to, close contact) with the wall of the container 140b and the obstacle O around the release position Pr. Thereby, the objects 10 can be densely disposed at the release position Pr inside the container 140b.

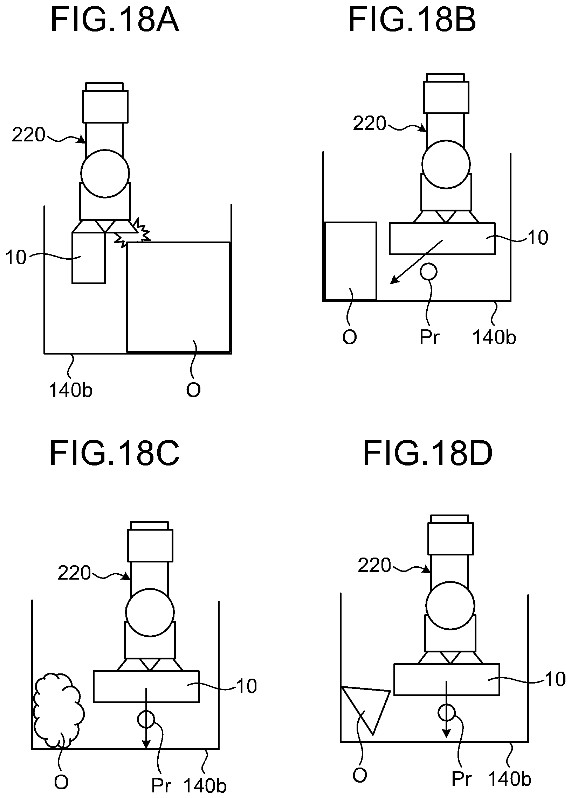

FIGS. 18A, 18B, 18C, and 18D are diagrams illustrating the states and moving directions of the hand 220 relative to various kinds of obstacles O. FIG. 18A illustrates an example that not the object 10 but the hand 220 interferes with the obstacle O. In such a case, under the control in the third control mode or the first control mode described above, the hand 220 can be moved to the release position Pr while avoiding the obstacle O, as in FIG. 17C. FIG. 18B illustrates an example of a solid obstacle O. In such a case, the robot controller 107 can release the object 10 while abutting on a side surface of the obstacle O and the bottom surface of the container 140b. In FIGS. 18C and 18D, when determining that the object 10 is difficult to press against the obstacle O from a result of the detection by the sensor 300, or when no information on the obstacle O located around the release position Pr is registered in a database to be referred to for the determination, the robot controller 107 or the integrator 101 can release the object 10 at the release position Pr apart from the obstacle O.

The hand 220 can be controlled in the first control mode, the second control mode, or the third control mode, as in the above embodiment, for grasping the object 10 at the temporary position Pt or releasing the object 10 at the temporary position Pt. In addition, with no container wall nor obstacle O found or if the image processor 102, the signal processor 103, or the integrator 101 determines there is no container wall nor obstacle O at the temporary position Pt from a result of the detection by the sensor 300, the moving interval of the hand 220 under the position control (in second control mode) may be set to a longer length than that in the case of moving to the grasp position Ph or the release position Pr. This can shorten the moving duration of the hand 220 in a path to approach the temporary position Pt.

The above computation and control executed by the control device 100 may be executed by software or hardware. The computation and control executed by the control device 100 may include both computation and control by software and computation and control by hardware. In the software processing, the control device 100 reads and executes a program (application) from a recording or storage medium such as a ROM, a HDD, an SSD, or a flash memory. The control device 100 operates in accordance with the program, and functions as the elements of the control device 100 including the integrator 101, the image processor 102, the signal processor 103, the grasp plan generator 104, the release plan generator 105, the motion plan generator 106, the robot controller 107, the peripheral device and I/O controller 108, the learning controller 109, and the error detector 110. In this case, the program includes modules corresponding to the elements described above.

The program may be recorded and provided in an installable or executable file format on a computer-readable recording medium such as a CD-ROM, a FD, a CD-R, a DVD, or a USB memory. The program may be stored in the storage of a computer connected to a communication network, and downloaded through the network. The program may be incorporated in a ROM in advance.

The control device 100, when partially implemented by hardware, may include, for example, a field programmable gate array (FPGA) and an application specific integrated circuit (ASIC).

As described above, in the present embodiment, the robot controller 107 (operation controller) controls the hand 220 (manipulator 200) by switching among the first control mode in which force and moment are set as controlled variables, the second control mode in which position and angle are set as controlled variables, and the third control mode in which force and moment as well as position and angle are set as controlled variables. With this configuration, for example, in the first control mode and the third control mode, the hand 220 can be controlled to contact the grasping surface of the object 10, the obstacle O, or a wall of the container 140b, that is, boxing control. In addition, it is possible to relieve impact due to interference and pressing force, leading to improving the protective performance for the object 10, the hand 220, the obstacle O, and the containers 140a and 140b. Further, the second control mode and the third control mode enable higher movement of the hand 220. Thus, by switching between the first control mode and another control mode, it is possible to provide the object handling system 1 that can simultaneously attain various higher-level effects such as improvement in density of handling objects including the object 10 in the container 140b, improvement in the protective performance, and reduction in the processing time.

In the present embodiment, the moving path of the hand 220 includes the first interval (Position P002 or Position Pcb to the grasp position Ph, and Position P009 or Position Pcb to the grasp position Ph) in which the hand 220 moves in the containers 140a and 140b in the first control mode, and the second interval (Position P003 to Position P008, position 010 to Position P001) in which the hand 220 moves outside the containers 140a and 140b in the second control mode. With this configuration, for example, the robot controller 107 controls the hand 220 in the first control mode including the force control in the first interval, inside the containers 140a and 140b, in which the object 10 and the hand 220 are likely to interfere with the other objects (for example, the obstacle O and the containers 140a and 140b), thereby improving the object density and the protective performance. The robot controller 107 controls the hand 220 in the second control mode including the position control in the second interval, outside the containers 140a and 140b, in which the object 10 and the hand 220 are unlikely to interfere with the other objects, thereby improving the processing speed.

In the present embodiment, the moving path of the hand 220 further includes the third interval (Position P002 to Position Pca and Position P009 to Position Pcb) in which the hand 220 moves in the containers 140a and 140b in the third control mode. With this configuration, for example, the robot controller 107 controls the hand 220 in the third control mode including both the position and force controls in the third interval, inside the containers 140a and 140b, in which the object 10 and the hand 220 are less likely to interfere with the other objects (than in the first interval), thereby further improving the processing speed in the containers 140a and 140b while ensuring necessary protective performance.

In the present embodiment, the robot controller 107 can switch the moving speed of the hand 220 in the second control mode depending on a location. Specifically, the moving speed in the fourth interval (Position P001 to Position P002, the grasp position Ph to Position P003, Position P008 to Position P009, and the release position Pr to Position P010) in the containers 140a and 140b in the second control mode may be set to lower than in the second interval (Position P003 to Position P008, position 010 to Position P001) outside the containers 140a and 140b in the second control mode. With this configuration, for example, it is possible to further improve the processing speed while maintaining necessary protective performance.

In the present embodiment, the gravitation compensator 107d compensates for the gravitational force for the force sensor 310 while the hand 220 receives gravitational force in the posture (second grasp posture) equivalent to the grasp posture or the release posture (first grasp posture). With this configuration, for example, the robot controller 107 can accurately detect the force and moment acting on the hand 220 in the first control mode including the force control, and accurately control the hand 220 in the first control mode. A system that includes the gravitation compensator 107d that can attain such effects is not limited to the object handling system 1 as above.

Specifications (such as structure, kind, direction, shape, size, length, width, thickness, height, number, disposition, position, material) of configurations, shapes, and the like may be changed as appropriate. For example, the hand control device is also applicable to a handling system other than the object handling system that conveys an object from inside of a container into another container.

**Claims**

1.  A hand control device (100) comprising:

    a plan generator (104, 105, 106) configured to generate an operation plan of a hand (220) that grasps an object (10); and
    an operation controller (107) configured to control operation of the hand (220) by switching between a first control mode and a control mode different from the first control mode, the first control mode being a mode in which the hand (220) is controlled to operate through force or moment acting on the hand (220), **characterized in that**
    the plan generator (104) sets a first grasp posture of the object (10) by the hand (220) in the first control mode, the first grasp posture being a posture at a moving start position or a posture at a release position at which the object (10) is released,
    the hand control device (100) further comprises:

       a detected-value acquirer (103) configured to acquire a detected value of force or moment acting on the hand (220); and
       a gravitation compensator (107d) configured to correct the detected value in accordance with a first detected value, the first detected value being acquired by the detected value acquirer (103) while the hand (220) grasps the object (10) in a second grasp posture, the second grasp posture in which the hand (220) receives gravitational force equivalent to gravitational force in the first grasp posture, and

    the operation controller (107) controls the operation of the hand (220) in accordance with the corrected detected value.

2.  The hand control device (100) according to claim 1, wherein in the first control mode, the operation controller (107) controls, while the hand (220) is moving to an intended position, the operation of the hand (220) so that the hand (220) receives:

    force not exceeding a target force value larger than zero in a direction opposite to a moving direction of the hand (220),
    substantially no force in a direction orthogonal to the moving direction,
    substantially no moment about an axis in the moving direction, and
    moment about an axis in the direction orthogonal to the moving direction to perform like a spring.

3.  The hand control device (100) according to claim 2, wherein
    the intended position includes a grasp position of the object (10) to be conveyed by the hand (220).

4.  The hand control device (100) according to claim 2, wherein
    the intended position includes a release position of the object (10) after conveyed by the hand (220).

5.  The hand control device (100) according to any one of claims 1 to 4, wherein
    the operation controller (107) controls the operation of the hand (220) in a second control mode, the second control mode being the different control mode, in which a position of the hand (220) is controlled.

6.  The hand control device (100) according to claim 5, wherein
    the hand (220) moves in a path including a first interval and a second interval, the first interval in which the operation controller (107) controls the operation of the hand (220) in the first control mode inside a container (140a, 140b), the second interval in which the operation controller (107) controls the operation of the hand (220) in the second control mode outside the container (140a, 140b).

7. The hand control device (100) according to claim 5 or 6, wherein
the operation controller (107) controls the operation of the hand (220) in a third control mode, the third control mode being the different control mode, in which the position of the hand (220) and force acting on the hand (220) are controlled.

8. The hand control device (100) according to claim 7, wherein
the hand (220) moves in a path including a third interval in which the operation controller (107) controls the operation of the hand (220) in the third control mode inside a container (140a, 140b).

9. The hand control device (100) according to claim 1, further comprising:

   a monitor (110) configured to monitor surroundings of a grasp position or a release position, wherein
   the plan generator (104, 105) sets a switching position between the first control mode and the different control mode in accordance with a result of the monitoring of the grasp position or the release position by the monitor (110).

10. The hand control device (100) according to claim 1, further comprising:

    a monitor (110) configured to monitor surroundings of a grasp position or a release position, wherein
    in the first control mode, the plan generator (106) sets:
    a target value of force acting on the hand (220) in a direction opposite to a moving direction of the hand (220),
    an operation mode and a target value of force acting on the hand (220) in a direction orthogonal to the moving direction,
    an operation mode and a target value of moment acting on the hand (220) about an axis in the moving direction, and
    an operation mode and a target value of moment acting on the hand (220) about an axis in a direction orthogonal to the moving direction, in accordance with a result of the monitoring of the grasp position or the release position by the monitor (110), and
    the operation controller (107) controls the operation of the hand (220) in accordance with the target values and the operation modes determined by the plan generator (106).

11. A system (1) comprising:

    a hand control device (100) according to any one of claims 1 to 10; and
    a manipulator (200) including an arm (210) and a hand (220).


**Patentansprüche**

1. Handsteuerungsvorrichtung (100) umfassend:

   einen Planerzeuger (104, 105, 106), der konfiguriert ist, einen Betriebsplan einer Hand (220) zu erzeugen, die ein Objekt (10) greift; und
   eine Betriebssteuerung (107), die konfiguriert ist, einen Betrieb der Hand (220) zu steuern, durch Schalten zwischen einem ersten Steuerungsmodus und einem vom ersten Steuerungsmodus unterschiedlichen Steuerungsmodus, wobei der erste Steuerungsmodus ein Modus ist, in dem die Hand (220) gesteuert wird, zum Betrieb durch Kraft oder Bewegung, die auf die Hand (220) wirkt,
   **dadurch gekennzeichnet, dass**
   der Planerzeuger (104) eine erste Greifhaltung des Objekts (10) durch die Hand (220) in dem ersten Steuerungsmodus einstellt, wobei die erste Greifhaltung eine Haltung an einer Bewegungsstartposition oder eine Haltung an einer Freigabeposition, an der das Objekt (10) freigegeben wird, ist,
   die Handsteuerungsvorrichtung (100) ferner umfasst:

      einen Erkannter-Wert-Erfasser (103), der konfiguriert ist, einen erkannten Wert einer Kraft oder Bewegung zu erfassen, die auf die Hand (220) wirkt; und
      einen Gravitationskompensator (107d), der konfiguriert ist, den erkannten Wert in Übereinstimmung mit einem ersten erkannten Wert zu korrigieren, wobei der erste erkannte Wert durch den Erkannter-Wert-Erfasser (103) erfasst wird, während die Hand (220) das Objekt (10) in einer zweiten Greifhaltung greift, wobei in der zweiten Greifhaltung die Hand (220) eine Gravitationskraft entsprechend der Gravitationskraft in der ersten Greifhaltung empfängt, und

die Betriebssteuerung (107) den Betrieb der Hand (220) in Übereinstimmung mit dem korrigierten erkannten Wert steuert.

2. Handsteuerungsvorrichtung (100) nach Anspruch 1, wobei in dem ersten Steuerungsmodus, die Betriebssteuerung (107), während sich die Hand (220) zu einer bestimmten Position bewegt, den Betrieb der Hand (220) so steuert, dass die Hand (220) empfängt:

eine Kraft, die einen Zielkraftwert größer als Null in eine Richtung entgegen einer Bewegungsrichtung der Hand (220) nicht überschreitet,
hauptsächlich keine Kraft in eine Richtung orthogonal zur Bewegungsrichtung,
hauptsächlich kein Drehmoment um eine Axe in der Bewegungsrichtung, und
ein Drehmoment um eine Axe in eine Richtung orthogonal zur Bewegungsachse, um wie eine Feder zu funktionieren.

3. Handsteuerungsvorrichtung (100) nach Anspruch 2, wobei
die bestimmte Position eine Greifposition des Objekts (10) umfasst, das durch die Hand (200) zu befördern ist.

4. Handsteuerungsvorrichtung (100) nach Anspruch 2, wobei
die bestimmte Position eine Freigabeposition des Objekts (10) umfasst, nach Beförderung durch die Hand (220).

5. Handsteuerungsvorrichtung (100) nach einem der Ansprüche 1 bis 4, wobei
die Betriebssteuerung (107) den Betrieb der Hand (220) in einem zweiten Steuerungsmodus steuert, wobei der zweite Steuerungsmodus der unterschiedliche Steuerungsmodus ist, in dem eine Position der Hand (220) gesteuert ist.

6. Handsteuerungsvorrichtung (100) nach Anspruch 5, wobei
die Hand (220) sich in einem Pfad bewegt, umfassend ein erstes Intervall und ein zweites Intervall, wobei in dem ersten Intervall die Betriebssteuerung (107) den Betrieb der Hand (220) in dem ersten Steuerungsmodus innerhalb eines Containers (140a, 140b) steuert, wobei in dem zweiten Intervall die Betriebssteuerung (107) den Betrieb der Hand (220) in dem zweiten Steuerungsmodus außerhalb des Containers (140a, 140b) steuert.

7. Handsteuerungsvorrichtung (100) nach Anspruch 5 oder 6, wobei
die Betriebssteuerung (107) die Steuerung der Hand (220) in einem dritten Steuerungsmodus steuert, wobei der dritte Steuerungsmodus der unterschiedliche Steuerungsmodus ist, in dem die Position der Hand (220) und eine auf die Hand (220) wirkende Kraft gesteuert werden.

8. Handsteuerungsvorrichtung (100) nach Anspruch 7, wobei
die Hand (220) sich in einem Pfad bewegt, umfassend ein drittes Interfall, in dem die Betriebssteuerung (107) den Betrieb der Hand (220) in dem dritten Steuerungsmodus innerhalb eines Containers (140a, 140b) steuert.

9. Handsteuerungsvorrichtung (100) nach Anspruch 1, ferner umfassend:

ein Überwacher (110), der konfiguriert ist, Umgebungen einer Greifposition oder einer Freigabeposition zu überwachen, wobei
der Planerzeuger (104, 105) eine Schaltposition zwischen dem ersten Steuerungsmodus und dem unterschiedlichen Steuerungsmodus in Übereinstimmung mit einem Ergebnis der Überwachung der Greifposition oder der Freigabeposition durch den Überwacher (110) einstellt.

10. Handsteuerungsvorrichtung (100) nach Anspruch 1, ferner umfassten:

ein Überwacher (110), der konfiguriert ist Umgebungen einer Greifposition oder einer Freigabeposition zu überwachen, wobei
in dem ersten Steuerungsmodus, der Planerzeuger (106) einstellt:

einen Zielwert einer Kraft, die auf die Hand (220) in eine Richtung entgegen einer Bewegungsrichtung der Hand (220) wirkt,

einen Betriebsmodus und einen Zielwert einer Kraft, die auf die Hand in eine Richtung orthogonal zur Bewegungsrichtung wirkt,

einen Betriebsmodus und einen Zielwert eines Drehmoments, das auf die Hand (220) um eine Achse in der Bewegungsrichtung wirkt,

einen Betriebsmodus und einen Zielwert eines Drehmoments, das auf die Hand (220) um eine Achse in eine Richtung orthogonal zur Bewegungsrichtung wirkt, in Übereinstimmung mit einem Ergebnis der Überwachung der Greifposition oder der Freigabeposition durch den Überwacher (110), und

die Betriebssteuerung (107) den Betrieb der Hand (220) in Übereinstimmung mit den Zielwerten und den Betriebsmodi steuert, die durch den Planerzeuger (106) bestimmt sind.

**11.** System (1) umfassend:

eine Handsteuerungsvorrichtung (1) nach einem der Ansprüche 1 bis 10; und
einen Manipulator (200) umfassend einen Arm (210) und eine Hand (220).

**Revendications**

**1.** Dispositif de contrôle de main (100) comprenant :

un générateur de plan (104, 105, 106) configuré pour générer un plan de fonctionnement d'une main (220) qui saisit un objet (10) ; et

un contrôleur de fonctionnement (107) configuré pour contrôler le fonctionnement de la main (220) en commutant entre un premier mode de contrôle et un mode de contrôle différent du premier mode de contrôle, le premier mode de contrôle étant un mode dans lequel la main (220) est contrôlée pour fonctionner grâce à une force ou un moment agissant sur la main (220), **caractérisé en ce que**

le générateur de plan (104) définit une première posture de préhension de l'objet (10) par la main (220) dans le premier mode de contrôle, la première posture de préhension étant une posture à une position de début de mouvement ou une posture à une position de relâchement à laquelle l'objet (10) est relâché,

le dispositif de contrôle de main (100) comprend en outre :

un dispositif d'acquisition de valeur détectée (103) configuré pour acquérir une valeur détectée de force ou de moment agissant sur la main (220) ; et

un compensateur de gravité (107d) configuré pour corriger la valeur détectée en fonction d'une première valeur détectée, la première valeur détectée étant acquise par le dispositif d'acquisition de valeur détectée (103) pendant que la main (220) saisit l'objet (10) dans une deuxième posture de préhension, la deuxième posture de préhension dans laquelle la main (220) reçoit une force gravitationnelle équivalente à la force gravitationnelle dans la première posture de préhension, et

le contrôleur de fonctionnement (107) contrôle le fonctionnement de la main (220) en fonction de la valeur détectée corrigée.

**2.** Dispositif de contrôle de main (100) selon la revendication 1, dans lequel, dans le premier mode de contrôle, le contrôleur de fonctionnement (107) contrôle, pendant que la main (220) se déplace vers une position prévue, le fonctionnement de la main (220) de telle sorte que la main (220) reçoive :

une force ne dépassant pas une valeur de force cible supérieure à zéro dans une direction opposée à une direction de déplacement de la main (220),

pratiquement aucune force dans une direction orthogonale à la direction de déplacement,

pratiquement aucun moment autour d'un axe dans la direction de déplacement, et

un moment autour d'un axe dans la direction orthogonale à la direction de déplacement pour agir comme un ressort.

**3.** Dispositif de contrôle de main (100) selon la revendication 2, dans lequel
la position prévue comprend une position de préhension de l'objet (10) à être transporté par la main (220).

**4.** Dispositif de contrôle de main (100) selon la revendication 2, dans lequel

la position prévue comprend une position de relâchement de l'objet (10) après son transport par la main (220).

5. Dispositif de contrôle de main (100) selon l'une quelconque des revendications 1 à 4, dans lequel
le contrôleur de fonctionnement (107) contrôle le fonctionnement de la main (220) dans un deuxième mode de contrôle, le deuxième mode de contrôle étant le mode de contrôle différent, dans lequel une position de la main (220) est contrôlée.

6. Dispositif de contrôle de main (100) selon la revendication 5, dans lequel
la main (220) se déplace selon un trajet comprenant un premier intervalle et un deuxième intervalle, le premier intervalle dans lequel le contrôleur de fonctionnement (107) contrôle le fonctionnement de la main (220) dans le premier mode de contrôle à l'intérieur d'un récipient (140a, 140b), le deuxième intervalle dans lequel le contrôleur de fonctionnement (107) contrôle le fonctionnement de la main (220) dans le deuxième mode de contrôle à l'extérieur du récipient (140a, 140b).

7. Dispositif de contrôle de main (100) selon la revendication 5 ou 6, dans lequel
le contrôleur de fonctionnement (107) contrôle le fonctionnement de la main (220) dans un troisième mode de contrôle, le troisième mode de contrôle étant le mode de contrôle différent, dans lequel la position de la main (220) et la force agissant sur la main (220) sont contrôlées.

8. Dispositif de contrôle de main (100) selon la revendication 7, dans lequel
la main (220) se déplace selon une trajectoire comprenant un troisième intervalle dans lequel le contrôleur de fonctionnement (107) contrôle le fonctionnement de la main (220) dans le troisième mode de contrôle à l'intérieur d'un récipient (140a, 140b).

9. Dispositif de contrôle de main (100) selon la revendication 1, comprenant en outre :

un moniteur (110) configuré pour surveiller l'environnement d'une position de préhension ou d'une position de relâchement, dans lequel
le générateur de plan (104, 105) définit une position de commutation entre le premier mode de contrôle et le mode de contrôle différent en fonction d'un résultat de la surveillance de la position de préhension ou de la position de relâchement par le moniteur (110).

10. Dispositif de contrôle de main (100) selon la revendication 1, comprenant en outre :

un moniteur (110) configuré pour surveiller l'environnement d'une position de préhension ou d'une position de relâchement, dans lequel
dans le premier mode de contrôle, le générateur de plan (106) définit :

une valeur cible de force agissant sur la main (220) dans une direction opposée à une direction de déplacement de la main (220),
un mode de fonctionnement et une valeur cible de force agissant sur la main (220) dans une direction orthogonale à la direction de déplacement,
un mode de fonctionnement et une valeur cible de moment agissant sur la main (220) autour d'un axe dans la direction de déplacement, et
un mode de fonctionnement et une valeur cible de moment agissant sur la main (220) autour d'un axe dans une direction orthogonale à la direction de déplacement, en fonction d'un résultat de la surveillance de la position de préhension ou de la position de relâchement par le dispositif de surveillance (110), et
le contrôleur de fonctionnement (107) contrôle le fonctionnement de la main (220) en fonction des valeurs cibles et aux modes de fonctionnement déterminés par le générateur de plan (106).

11. Système (1) comprenant :

un dispositif de contrôle de main (100) selon l'une quelconque des revendications 1 à 10 ; et
un manipulateur (200) comprenant un bras (210) et une main (220).

# FIG.1

EP 3 623 115 B1

# FIG.2A

220

(300)
310

220b

220a

# FIG.2B

220

(300)
310

220a

# FIG.2C

220

(300)
310

220a

# FIG.2D

220

(300)
310

220c

220d

# FIG.3A

# FIG.3B

# FIG.3C

# FIG.3D

# FIG.4

CONTROL DEVICE (100)

EXTERNAL I/F (130)

INTERNAL DB (120)

CAMERA (300)(320)

SENSOR (300)

IMAGE PROCESSOR (102)

SIGNAL PROCESSOR (103)

LEARNING CONTROLLER (109)

INTEGRATOR (101)

GRASP PLAN GENERATOR (104)

RELEASE PLAN GENERATOR (105)

MOTION PLAN GENERATOR (106)

ROBOT CONTROLLER (107)

PERIPHERAL DEVICE AND I/O CONTROLLER (108)

ERROR DETECTOR (110)

MANIPULATOR (200)

PERIPHERAL DEVICE (500)

1

# FIG.5

START

RECEIVE PICKING INSTRUCTION — S1-1

CHECK CONTAINER ARRIVAL — S1-2

IMAGE GRASP POSITION — S1-3

CALCULATE GRASPING SURFACE INFORMATION — S1-4

CALCULATE PERIPHERAL INFORMATION AND ADDITIONAL INFORMATION — S1-5

CALCULATE GRASP INFORMATION — S1-6

PERFORM GRASPING — S1-7

IS GRASPING SUCCESSFUL? — S1-8

N

PREPARE FOR RETRY — S1-9

Y

IMAGE GRASPING STATE — S1-10

GENERATE OBJECT INFORMATION — S1-11

IMAGE RELEASE POSITION — S1-12

GENERATE PERIPHERAL FORMATION OF RELEASE POSITION — S1-13

CALCULATE RELEASE INFORMATION — S1-14

DETERMINE RELEASE POSITION AND POSTURE — S1-15

PERFORM RELEASING — S1-16

MOVE OUT OF CONTAINER — S1-17

FORCE COMPENSATION — S1-18

IS END INSTRUCTION RECEIVED? — S1-19

N

Y

END

FIG.6

# FIG.7A

# FIG.7B

# FIG.8

ROBOT CONTROLLER `107`

INVERSE KINEMATICS CALCULATOR `107b`

JOINT COORDINATE POSITION CONTROLLER `107c`

FINGERTIP COORDINATES FORCE CONTROLLER `107a`

GRAVITATION COMPENSATOR `107d`

TARGET FINGERTIP-POSITION VALUE

FORCE CONTROL MODE AND TARGET FORCE VALUE

COMPEN-SATION VALUE

ROBOT POSTURE INFORMATION OBJECT INFORMATION, AND MANAGEMENT INFORMATION

MANIPULATOR `200`

SERVO MOTOR

ENCODER

FORCE SENSOR

JOINT-POSITION COMMAND VALUE

JOINT POSITION INFORMATION

FORCE INFORMATION

310 (300)

EP 3 623 115 B1

FIG.9

**107a  FINGERTIP COORDINATES FORCE CONTROLLER**

FINGERTIP-POSITION COMMAND VALUE

107a4  FINGERTIP POSITION CONTROLLER

FORCE INFORMATION

107a3  CONVERTER

CONVERSION SWITCHING PARAMETER

TARGET FINGERTIP-POSITION VALUE [X, Y, Z, A, B, C]

MICRO-DISPLACEMENT AND ROTATION ANGLE [ΔX, ΔY, ΔZ, A, B, C]

107a2  FORCE FEEDBACK CONTROLLER

TARGET FORCE VALUE

107a1  MANAGER

MODE SWITCHING PARAMETER

FORCE CONTROL MODE AND TARGET FORCE VALUE

# FIG.10

GRAVITATION COMPENSATOR 107d

MEMORY 107d3

COMPEN-
SATION
VALUE

COORDINATE
CONVERTER 107d4

MANAGER 107d2

LPF 107d1

FORCE
INFORMATION

ROBOT POSTURE INFORMATION,
OBJECT INFORMATION, AND
MANAGEMENT INFORMATION

# FIG.11

# FIG.12

START

MOVEMENT BY POSITION CONTROL ⌐S2-1

ARRIVAL AT POSITION RIGHT BEFORE GRASPING ⌐S2-2

IS CONTACT LIKELY? ⌐S2-3

N · Y

MOVEMENT BY POSITION CONTROL ⌐S2-4

MOVEMENT BY POSITION AND FORCE CONTROL ⌐S2-11

ARRIVAL AT POSITION RIGHT BEFORE GRASPING ～S2-5

MOVEMENT BY POSITION AND FORCE CONTROL ⌐S2-6

MOVEMENT BY FORCE CONTROL ⌐S2-7

REACHING TARGET VALUE? ⌐S2-8

N · Y

REACHING LIMIT? ⌐S2-9

N

Y

GRASP AND MAINTAIN ⌐S2-10

END

# FIG.13A

# FIG.13B

# FIG.13C

# FIG.14A

# FIG.14B

# FIG.15

```
           START

                    ⌐S3-1
   MOVEMENT BY POSITION CONTROL

                    ⌐S3-2
   ARRIVAL AT POSITION RIGHT
   BEFORE RELEASING

                    ⌐S3-3                    Y
        IS CONTACT LIKELY?  ─────────────────────┐
                                                 │
              │ N           ⌐S3-4                │      ⌐S3-11
   MOVEMENT BY POSITION CONTROL          MOVEMENT BY POSITION
                                         AND FORCE CONTROL
              │  ◄──────────────────────────────┘
                             ~S3-5
   ARRIVAL AT POSITION RIGHT
   BEFORE RELEASING

                    ⌐S3-6
   MOVEMENT IN POSITION AND FORCE
   CONTROL MODES

                    ⌐S3-7
   MOVEMENT BY FORCE CONTROL

                    ⌐S3-8              Y
      REACHING TARGET VALUE? ──────────────────────┐
                                                   │
              │ N           ⌐S3-9       N          │
        REACHING LIMIT? ─────────────────────────┐ │
                                                 │ │
              │ Y                                │ │     ⌐S3-10
                                          RELEASEE AND MAINTAIN
              │  ◄──────────────────────────────┘

            END
```

# FIG.16A

220

10

P008

140b    P009

# FIG.16B

220

P009

140b    Pcb    10

# FIG.16C

220

140b    Pcb    10

# FIG.16D

10
(Pr)

140b

# FIG.16E

220

10

P008

P009

140b     O

# FIG.16F

220

10

P009

140b    Pcb    O

# FIG.16G

220

10

140b    Pcb    O

# FIG.16H

10
(Pr)    140b    O

# FIG.17A

220

10

P008

P009

140b    O

# FIG.17B

220

10

P009

140b    Pcb    O

# FIG.17C

220

10

P009

140b    Pcb    O

# FIG.17D

220

10

140b    Pcb    O

# FIG.18A

# FIG.18B

# FIG.18C

# FIG.18D

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015085501 A
- US 2009069942 A1

- US 2016354925 A1

**Non-patent literature cited in the description**

- Robot control System with Integrated Vision/Force feedback for automated sorting System. **MOHAMAD BDIWI et al.** TECHNOLOGIES FOR PRACTICAL ROBOT APPLICATIONS (TEPRA), 2012 IEEE INTERNATIONAL CONFERENCE ON. IEEE, 23 April 2012, 31-36